(19) Europäisches Patentamt
European Patent Office
Office européen des brevets

(11) **EP 2 783 824 B1**

(12) **EUROPÄISCHE PATENTSCHRIFT**

(45) Veröffentlichungstag und Bekanntmachung des Hinweises auf die Patenterteilung:
**13.07.2016   Patentblatt 2016/28**

(51) Int Cl.:
**B29B 17/02** *(2006.01)*        **C10B 47/30** *(2006.01)*

(21) Anmeldenummer: **13001992.0**

(22) Anmeldetag: **16.04.2013**

(54) **Verfahren zur Rückgewinnung von Kohlenstofffasern aus kohlenstofffaserhaltigen Kunststoffen**

Method for the recovery of carbon fibres from plastics containing carbon fibre

Procédé destinés à la récupération de fibres de carbone à partir de matières synthétiques contenant des fibres de carbone

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **28.03.2013   EP 13001622**

(43) Veröffentlichungstag der Anmeldung:
**01.10.2014   Patentblatt 2014/40**

(73) Patentinhaber: **ELG Carbon Fibre International GmbH**
**47138 Duisburg (DE)**

(72) Erfinder: **Gehr, Marco**
**51789 Lindlar (DE)**

(74) Vertreter: **Von Rohr Patentanwälte Partnerschaft mbB**
**Rüttenscheider Straße 62**
**45130 Essen (DE)**

(56) Entgegenhaltungen:
WO-A1-03/089212        DE-C1- 10 026 761
US-A1- 2010 189 629

- JOSEPH P HEIL ET AL: "Mechanical and wetting behavior of recycled carbon fibers recovered from pyrolysis processes", INTERNATIONAL SAMPE TECHNICAL CONFERENCE; SAMPE 2012 - BALTIMORE, MD MAY 21 - MAY 24, 2012,, 1 January 2012 (2012-01-01), page 15PP, XP009183043,
- GUOZHAN JIANG: '8 TH INTERNATIONAL CONFERENCE ON COMPOSITE MATERIALS' 18TH INTERNATIONAL CONFERENCE ON COMPOSITE MATERIALS, [Online] 01 Januar 2011, Seiten 1 - 6, XP055175023 Gefunden im Internet: <URL:http://www.iccm-central.org/Proceedings/ICCM18proceedings/data/2. Oral Presentation/Aug26(Friday)/F28 Recycling/F28-3-IF1504.pdf> [gefunden am 2015-03-09]

**Beschreibung**

Die vorliegende Erfindung betrifft das technische Gebiet der Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen bzw. kohlenstofffaserverstärkten Verbundwerkstoffen (Kompositmaterialien).

Insbesondere betrifft die vorliegende Erfindung ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen bzw. kohlenstofffaserverstärkten Verbundwerkstoffen (Kompositmaterialien).

Im Allgemeinen können kohlenstofffaserverstärkte Kunststoffe (synonym auch CFKs genannt) als Faser-Kunststoff-Verbundwerkstoffe bezeichnet werden, bei welchen eine Vielzahl von Kohlenstofffasern, vorzugsweise in mehreren Lagen, als Verstärkung in eine Matrix, wie Kunststoff, eingebettet werden. Als Kunststoffmatrix können sowohl Duromere, wie Epoxidharze, Acrylate und Polyurethane, als auch Thermoplasten, wie Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC), verwendet werden. Es ist jedoch auch möglich, Kohlenstofffasern in eine Matrix aus Keramik (synonym auch als keramische Faserverbundstoffe bezeichnet) einzubetten, um thermisch sehr belastbare Bauteile, wie Bremsscheiben, zu erhalten.

Kohlenstofffaserverstärke Kunststoffe (CFKs) weisen eine hohe Festigkeit und Steifigkeit bei gleichzeitig geringem Gewicht auf und werden vorzugsweise in Bereichen eingesetzt, wo hohe gewichtsspezifische Festigkeiten und Steifigkeiten erforderlich sind. Beispielsweise werden CFKs in der Luft- und Raumfahrt, in der Windkraftindustrie, im Fahrzeugbau oder für Sportgeräte, wie Fahrradrahmen, Speedskates, Tennisschläger, Sportpfeile und Angelruten, verwendet. Im Bauwesen können kohlenstofffaserverstärke Kunststoffe (CFKs) in Form von Lamellen oberflächlich auf die Bauteiloberfläche geklebt werden, um Bauwerke zu verstärken.

Die Festigkeit und Steifigkeit von aus kohlenstofffaserverstärkten Kunststoffen (CFKs) hergestellten Materialien bzw. Bauteilen ist im Allgemeinen - wie bei anderen Faser-Matrix-Verbundwerkstoffen - in Faserrichtung wesentlich höher als quer zur Faserrichtung. So kann beispielsweise quer zu den Kohlenstofffasern die Festigkeit geringer sein als die Festigkeit des verwendeten Matrixmaterials. Um eine gleichmäßige Festigkeit und Steifigkeit der Materialien bzw. Bauteile aus CFKs in alle Raumrichtungen zu gewährleisten, werden einzelne Faserlagen in verschiedenen Richtungen verlegt. Beispielsweise können im Fall von Hochleistungskonstruktionsbauteilen die Faserrichtungen mittels Computerberechnungen, wie der klassischen Laminattheorie, bestimmt werden, um die vorgegebene Festigkeit und Steifigkeit zu erreichen.

Die zur Herstellung von CFKs verwendeten Kohlenstoffprimärfasern (synonym auch virgin fibers genannt) werden überwiegend industriell aus kohlenstoffhaltigen Ausgangsmaterialien, insbesondere Polyacrylnitril (PAN), durch Stabilisierungsreaktionen an Luft, nachfolgender Pyrolyse in inerter Atmosphäre und anschließender Graphitisierung hergestellt. Die Steifigkeit und Festigkeit der Kohlenstoffprimärfasern kann dabei während des Herstellprozesses durch die Vorspannung sowie die Temperaturen bei der Carbonisierung und Graphitisierung gezielt gesteuert werden, so dass verschiedene Fasertypen kommerziell erhältlich sind. Aufgrund ihrer kostengünstigen Herstellung werden überwiegend HT-Fasern (hochfeste Fasern) sowie IM-Fasern (Intermediate Modulus Fasern) als Kohlenstoffprimärfasern eingesetzt. Um die Adhäsion der Kohlenstoffprimärfasern nach der Graphitisierung zu erhöhen, kann eine Oxidation der Oberfläche der Kohlenstoffprimärfasern mittels elektrochemischer Behandlung durchgeführt werden. Im Allgemeinen werden die Kohlenstoffprimärfasern anschließend mit einem Schlichtmittel, wie einem Epoxidharz, versehen und zu sogenannten Rovings zusammengefasst. Diese Rovings werden in einem letzten Schritt auf konventionelle Textilspindeln aufgewickelt.

In Abhängigkeit der Faserlänge der eingesetzten Kohlenstoffprimärfasern können zur Herstellung von kohlenstofffaserverstärkten Kunststoffen (CFKs) verschiedene Verfahren verwendet werden. CFK-Teile mit langen Kohlenstoffprimärfasern können im Allgemeinen mittels Harzinjektionsverfahren (auch als Resin Transfer Moulding (RTM) bezeichnet) hergestellt werden. In einem ersten Schritt des Harzinjektionsverfahrens werden sogenannte Preforms hergestellt, welche aus einer Lage oder aus mehreren Lagen von verwobenen Kohlenstoffprimärfasern bestehen um eine gleichbleibende Festigkeit und Steifigkeit in alle Raumrichtungen zu gewährleisten. Diese Preforms werden in einem zweiten Schritt in einer geschlossenen Gussform mit einer verflüssigten Matrix aus Kunststoff und gegebenenfalls Härter versetzt. Nach Aushärtung der Matrix und Entfernung von überschüssigem Randmaterial werden die entsprechenden CFK-Bauteile erhalten.

Die Herstellung von kohlenstofffaserverstärkten Kunststoffen (CFKs) mit kurzen Kohlenstoffprimärfasern, insbesondere mit zerkleinerten Kohlenstoffprimärfasern, erfolgt im Allgemeinen mittels Spritzgießverfahren. Dazu werden die zerkleinerten Kohlenstoffprimärfasern chargenweise mit einer verflüssigten Matrix aus Kunststoff(en) vermischt, extrudiert und anschließend mittels Spritzgießverfahren zu CFK-Bauteilen verarbeitet.

Der Einsatz von kohlenstofffaserverstärken Kunststoffen (CFKs) führt jedoch im Vergleich zu dem Einsatz von gleichartigen Bauteilen aus Leichtmetallen, wie Aluminium, Magnesium und Titan, zu erheblich höheren Kosten in Bezug auf das endfertige Erzeugnis. Dies hängt insbesondere mit der aufwendigen und kostenintensiven Herstellung von Kohlenstoffprimärfasern aus kohlenstoffhaltigen Ausgangsmaterialien, insbesondere Polyacrylnitril (PAN), zusammen. Zudem steigt der weltweite Verbrauch an Kohlenstoffprimärfasern zur Herstellung von CFK-Bauteilen stark an, so dass aufgrund der hohen weltweiten Nachfrage an Kohlenstoffprimärfasern keine signifikante Reduzierung der Kosten bei dem Einsatz von kohlenstofffaserverstärkten Kunststoffen zu erwarten ist.

Trotz des hohen Bedarfs an Kohlenstoffprimärfasern werden große Mengen an unverarbeiteten, aber bereits mit einem Kunststoff vorimprägnierten Kohlenstoffprimärfasern (Prepregs oder auch Preimpregnated Fibers genannt), bei welchen der Kunststoff ausgehärtet ist oder welche das Lagerdatum überschritten haben, als CFK-haltiger Abfall entsorgt.

Auch fallen bei der Herstellung von Flugzeugteilen und Teilen für Windkrafträder sowie aufgrund von zu entsorgenden Modellformen, Produktionsabfällen, Prototypen, Fehlchargen und sogenannten "End-of-life"-Komponenten große Mengen an CFK-haltigen Kunststoffabfällen an, welche entsorgt werden müssen.

Die Entsorgung von CFK-haltigen Kunststoffabfällen auf Mülldeponien ist jedoch aufgrund der darin enthaltenen wertvollen Kohlenstofffasern unwirtschaftlich. Weiterhin wird im Allgemeinen erwartet, dass die CFK-haltigen Kunststoffabfälle aufgrund ihrer chemischen Inertheit über einen langen Zeitraum hinweg unverändert bleiben und auf Mülldeponien nicht abgebaut werden können. Darüber hinaus ist eine unbegrenzte Entsorgung von CFK-haltigen Abfällen aufgrund von gesetzlichen Vorschriften in vielen europäischen Ländern nicht ohne Weiteres möglich oder sogar untersagt.

Somit besteht ein großer Bedarf an kostengünstigen und effizienten Verfahren zur Rückgewinnung bzw. Rezyklierung von Kohlenstofffasern aus CFK-haltigen Abfällen, insbesondere vor dem Hintergrund des weltweit bestehenden Bedarfs an Kohlenstofffasern für die Herstellung von CFK-Bauteilen.

Im Stand der Technik sind Verfahren zur Rückgewinnung von Kohlenstofffasern aus CFK-haltigen Abfällen bekannt. Diese Verfahren erfordern jedoch die Verwendung einer inerten Atmosphäre oder die Verwendung eines Vakuums während der Entfernung der Kunststoffmatrix, so dass abgedichtete und komplexe Vorrichtungen sowie eine aufwendige Verfahrensführung erforderlich sind.

Aufgrund der komplexen Verfahren und Vorrichtungen sind somit die Kosten für die Rückgewinnung (Rezyklierung) von Kohlenstofffasern aus CFK-haltigen Abfällen mit den zuvor beschriebenen Verfahren hoch.

Weiterhin müssen die CFK-haltigen Abfälle vor der Rückgewinnung (Rezyklierung) aufwendig vorbehandelt werden, insbesondere durch mechanische und/oder chemische Verfahren.

Aus diesem Grund ist bislang der Einsatz von rezyklierten Kohlenstofffasern in CFK-Bauteilen aufgrund der mechanischen Vorbehandlung, insbesondere der Zerkleinerung, nur begrenzt möglich. Zudem weisen die rezyklierten Kohlenstofffasern einen hohen Anteil an Pyrolyse- bzw. Verkokungsrückständen auf, welcher sich negativ auf die Einarbeitung in eine Kunststoffmatrix auswirken kann.

Derartige Verfahren des Standes der Technik sind beispielsweise beschrieben in der DE 10 2008 002 846 B4, der EP 0 636 428 A1 und der DE 100 26 761 C1.

Auch sind im Stand der Technik Verfahren zur Rezyklierung von Kohlenstofffasern aus CFK-haltigen Abfällen im Labormaßstab bekannt. Jedoch sind auch diese Verfahren oftmals komplex und ungeeignet für die Rezyklierung von Kohlenstofffasern im industriellen Maßstab.

Die US 2010/0189629 A1 betrifft eine Vorrichtung sowie ein Verfahren zur Rezyklierung von Kohlenstofffasern, wobei bei dem Verfahren und der Vorrichtung gemäß US 2010/0189629 A1 mehrere Pyrolysezonen vorgesehen sind.

Der vorliegenden Erfindung liegt daher die Aufgabe zugrunde, ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen bzw. kohlenstofffaserverstärkten Verbundwerkstoffen (Kompositmaterialien), bereitzustellen, wobei die zuvor geschilderten, mit dem Stand der Technik verbundenen Nachteile zumindest weitgehend vermieden oder aber wenigstens abgeschwächt werden sollen.

Insbesondere ist eine Aufgabe der vorliegenden Erfindung die Bereitstellung eines Verfahrens zur Rückgewinnung (Rezyklierung) von Kohlenstofffasern aus kohlenstofffaserhaltigen Kunststoffen, wobei das Verfahren kostengünstig und im industriellen Maßstab durchführbar sein soll. Des Weiteren sollen durch das Verfahren rezyklierte Kohlenstofffasern erhalten werden, welche zumindest im Wesentlichen frei sind von Pyrolyse- bzw. Verkokungsrückständen und eine gute Einarbeitbarkeit in Kunststoffe aufweisen.

Die Anmelderin hat nun in überraschender Weise gefunden, dass die zuvor geschilderte Problemstellung in effizienter Weise gelöst werden kann, indem das Verfahren zur Rückgewinnung (Rezyklierung) von Kohlenstofffasern aus kohlenstofffaserhaltigen Kunststoffen derart durchgeführt wird, dass die Kunststoffmatrix solcher kohlenstofffaserhaltiger Kunststoffe in einer Pyrolyseeinrichtung mit mindestens einer ersten und einer nachfolgenden zweiten Pyrolysezone einer Pyrolyse in Gegenwart von Sauerstoff unterzogen wird, wobei der Sauerstoffgehalt der zweiten Pyrolysezone gegenüber dem Sauerstoffgehalt der ersten Pyrolysezone erhöht wird und/oder die Temperatur der zweiten Pyrolysezone gegenüber der Temperatur der ersten Pyrolysezone erhöht wird.

Das erfindungsgemäße Verfahren resultiert zum einen in einer selektiven Entfernung der Kunststoffmatrix, so dass rezyklierte Kohlenstofffasern erhalten werden, welche zumindest im Wesentlichen keine Pyrolyse- bzw. Verkokungsrückstände aufweisen. Zum anderen führt die erfindungsgemäße Verfahrensführung zu einer teilweisen Oxidation der Oberfläche der rezyklierten Kohlenstofffasern, d. h. zu einer rauheren und bindungsaffinen, insbesondere hydrophilen, Oberfläche und zu einer Erhöhung sauerstoffhaltiger Gruppen an der Oberfläche der resultierenden rezyklierten Kohlenstofffasern, wie Hydroxy-, Aldehyd-, Carboxylgruppen etc. Die teilweise Oxidation der Oberfläche der aus dem erfindungsgemäßen Verfahren resultierenden rezyklierten Kohlenstofffasern führt aufgrund der rauheren und funktionalisierten, insbesondere hydrophileren, Oberfläche der rezyklierten Kohlenstofffasern zu einer erhöhten Benetzbarkeit und somit auch zu einer verbesserten Einarbeitbarkeit in Kunststoffe im Vergleich zu Kohlenstoffprimärfasern oder herkömmlich rezyklierten Kohlenstofffasern.

Zur Lösung des zuvor geschilderten Problems schlägt die vorliegende Erfindung somit ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen bzw. kohlenstofffaserverstärkten Verbundwerkstoffen (Kompositmaterialien), gemäß Anspruch 1 vor. Weitere, vorteilhafte Eigenschaften des erfindungsgemäßen Verfahrens sind Gegenstand der diesbezüglichen Verfahrensunteransprüche.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Im Übrigen gilt, dass der Fachmann anwendungsbezogen oder einzelfallbedingt von den nachfolgend aufgeführten Zahlen-, Wert- bzw. Bereichsangaben abweichen kann, ohne dass er den Rahmen der vorliegenden Erfindung verlässt.

Gegenstand der vorliegenden Erfindung - gemäß der vorliegenden Erfindung - ist somit ein Verfahren zur Rückgewinnung (Rezyklierung) von Kohlenstofffasern aus kohlenstofffaserhaltigen Kunststoffen, insbesondere aus kohlenstofffaserverstärkten Kunststoffen (CFKs), vorzugsweise aus kohlenstofffaserhaltigen und/oder kohlenstofffaserverstärkten Verbundwerkstoffen (Kompositmaterialien),

wobei ein Gegenstand auf Basis eines Kohlenstofffasern enthaltenden Kunststoffs, welcher Kohlenstofffasern in einer Kunststoffmatrix umfasst, einer mehrstufigen Pyrolyse in Gegenwart von Sauerstoff unterzogen wird, wobei bei der Pyrolyse der Kunststoff der Kunststoffmatrix unter Erhalt der Kohlenstofffasern zersetzt wird,

wobei die Pyrolyse in einer Pyrolysevorrichtung P durchgeführt wird, wobei die Pyrolysevorrichtung P mindestens die folgenden Behandlungszonen in der nachfolgend spezifizierten Abfolge umfasst und der zu rezyklierende bzw. zu behandelnde Gegenstand in dieser Abfolge die nachfolgenden Behandlungszonen durchläuft:

(A) eine Aufwärmzone A, in welcher der zu behandelnde und/oder zu rezyklierende Gegenstand auf eine definierte Temperatur T(A) erwärmt wird,

(B1) nachfolgend eine erste Pyrolysezone B1, in welcher bei einer definierten Temperatur T(B1) und einem definierten Sauerstoffgehalt G(B1) eine Pyrolyse des Kunststoffs der Kunststoffmatrix des zu behandelnden Gegenstands einsetzt und/oder durchgeführt wird,

(B2) nachfolgend eine zweite Pyrolysezone B2, in welcher bei einer definierten Temperatur T(B2) und einem definierten Sauerstoffgehalt G(B2) eine abschließende Pyrolyse des nach der Pyrolysezone B1 noch verbleibenden Kunststoffs der Kunststoffmatrix des zu behandelnden Gegenstands bis zur zumindest im Wesentlichen vollständigen Entfernung durchgeführt wird,

(C) nachfolgend eine Abkühlzone C zum Abkühlen der aus der zweiten Pyrolysezone B2 erhaltenen rezyklierten Kohlenstofffasern RF,

wobei der Sauerstoffgehalt G(B2) in der zweiten Pyrolysezone B2 gegenüber dem Sauerstoffgehalt G(B1) in der ersten Pyrolysezone B1 erhöht wird und wobei die Temperatur T(B2) in der zweiten Pyrolysezone B2 gegenüber der Temperatur T(B1) in der ersten Pyrolysezone B1 erhöht wird,

wobei der Sauerstoffgehalt G(B1) in der in der ersten Pyrolysezone B1 im Bereich von 0,1 Vol.-% bis 12 Vol.-% eingestellt wird und der Sauerstoffgehalt G(B2) in der in der ersten Pyrolysezone B2 im Bereich von 3 Vol.-% bis 20 Vol.-% eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 um 3 Vol.-% bis 15 Vol.-% erhöht wird, und

wobei die Temperatur T(B2) in der zweiten Pyrolysezone B2 gegenüber der Temperatur T(B1) in der ersten Pyrolysezone B1 um 25 °C bis 300 °C erhöht wird.

Die Temperaturangaben, insbesondere die Angabe der Temperaturen T(B1) und T(B2), und die in diesem Zusammenhang nachfolgend noch aufgeführten konkreten Temperaturwerte bzw. Temperaturwertebereiche beziehen sich insbesondere auf die Temperaturen, welche in dem zu behandelnden bzw. zu rezyklierenden Gegenstand erreicht werden.

Eine Besonderheit des erfindungsgemäßen Verfahrens zur Rückgewinnung (Rezyklierung) von Kohlenstofffasern aus kohlenstofffaserhaltigen Kunststoffen ist insbesondere darin zu sehen, dass durch die erfindungsgemäße Verfahrensführung, insbesondere die Erhöhung des Sauerstoffgehalts in der zweiten Pyrolysezone und/oder die Erhöhung der Temperatur in der zweiten Pyrolysezone, rezyklierte Kohlenstofffasern erhalten werden, welche überraschenderweise zumindest im Wesentlichen keinerlei Pyrolyserückstände aufweisen und zudem, insbesondere aufgrund der teilweisen Oxidation der Oberfläche der Kohlenstofffasern, eine bessere Benetzbarkeit im Vergleich zu Kohlenstoffprimärfasern und herkömmlich rezyklierten Kohlenstofffasern aufweisen.

Somit ermöglicht das erfindungsgemäße Verfahren eine selektive Entfernung des Kunststoffs der Kunststoffmatrix, wobei jedoch die rezyklierten Kohlenstofffasern nicht zerstört werden und folglich keine signifikante Verschlechterung der mechanischen Eigenschaften, insbesondere der Zugfestigkeit und des Elastizitätsmoduls, eintritt, so dass die Materialeigenschaften der rezyklierten Kohlenstofffasern zumindest im Wesentlichen denen von Kohlenstoffprimärfasern entsprechen.

Weiterhin wird durch die erfindungsgemäße Verfahrensführung die Oberfläche der rezyklierten Kohlenstofffasern leicht oxidiert, d. h. die Oberfläche ist rauher und die Anzahl der sauerstoffhaltigen funktionellen Gruppen an der Oberfläche der Kohlenstofffasern, wie Phenol-, Carboxyl-, Carbonyl-, Aldehyd-, Keto-, Hydroxy-und/oder Oxogruppen, ist signifikant größer als im Fall von Kohlenstoffprimärfasern oder herkömmlich rezyklierten Kohlenstofffasern.

Die aus der oxidierten Oberfläche resultierende Aufrauhung und größere Hydrophilie der rezyklierten Kohlenstofffasern führt zu einer verbesserten Benetzbarkeit und somit auch zu einer verbesserten Einarbeitbarkeit der rezyklierten Kohlenstofffasern in Kunststoffe, Baustoffe oder zementäre Systeme.

Gemäß der vorliegenden Erfindung wird der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht. Um die Oxidierung der Kohlenstofffasern in der ersten Pyrolysezone B1 zu vermeiden, wird eine geringere Menge an Sauerstoff verwendet als in der zweiten Pyrolysezone B2, in welcher die Entfernung von Pyrolyserückständen von der Oberfläche der rezyklierten Kohlenstofffasern erfolgt. Der Zerfall der Kunststoffmatrix des Kunststoffs findet somit zumindest im Wesentlichen im ersten Pyrolyseabschnitt B1 bei niedrigeren Sauerstoffgehalten statt als die Entfernung von Pyrolyserückständen in der zweiten Pyrolysezone B2. Die Anwesenheit von nur geringen Mengen an Sauerstoff in der ersten Pyrolysezone B1 wird insbesondere dadurch erreicht, dass die Atmosphäre in der ersten Pyrolysezone B1 im Wesentlichen mit Dampf gesättigt ist, welcher insbesondere aus bei der Pyrolyse der Kunststoffmatrix des Kunststoffs auftretenden gasförmigen Zersetzungsprodukten besteht und welcher an sich nur einen geringen Anteil an Sauerstoff aufweist.

In diesem Zusammenhang ist es insbesondere vorgesehen, dass der Sauerstoffgehalt G(B2) in der zweiten Pyrolysezone B2 gegenüber dem Sauerstoffgehalt G(B1) in der ersten Pyrolysezone B1 um 3 Vol.-% bis 15 Vol.-%, insbesondere um 5 Vol.-% bis 15 Vol.-%, vorzugsweise um 7,5 Vol.-% bis 15 Vol.-%, besonders bevorzugt um 10 Vol.-% bis 15 Vol.-%, erhöht wird. Wie bereits vorstehend ausgeführt, wird in der zweiten Pyrolysezone B2 ein höherer Sauerstoffgehalt als in der ersten Pyrolysezone B1 eingestellt, um die Pyrolyserückstände an der Oberfläche der rezyklierten Kohlenstofffasern zumindest im Wesentlichen vollständig zu entfernen.

Besonders gute Ergebnisse im Rahmen der vorliegenden Erfindung werden erhalten, wenn der Sauerstoffgehalt G(B1) in der ersten Pyrolysezone B1 im Bereich von 0,1 Vol.-% bis 12 Vol.-%, insbesondere im Bereich von 0,5 Vol.-% bis 10 Vol.-%, vorzugsweise im Bereich von 0,75 Vol.-% bis 6 Vol.-%, besonders bevorzugt im Bereich von 1 Vol.-% bis 4 Vol.-%, eingestellt wird und der Sauerstoffgehalt G(B2) in der zweiten Pyrolysezone B2 im Bereich von 2 Vol.-% bis 30 Vol.-%, insbesondere im Bereich von 3 Vol.-% bis 20 Vol.-%, vorzugsweise im Bereich von 5 Vol.-% bis 17 Vol.-%, besonders bevorzugt im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht wird und/oder dass der Sauerstoffgehalt G(B2) in der zweiten Pyrolysezone B2 gegenüber dem Sauerstoffgehalt G(B1) in der ersten Pyrolysezone B1 um 3 Vol.-% bis 15 Vol.-%, insbesondere um 5 Vol.-% bis 15 Vol.-%, vorzugsweise um 7,5 Vol.-% bis 15 Vol.-%, besonders bevorzugt um 10 Vol.-% bis 15 Vol.-%, erhöht wird.

Im Rahmen der vorliegenden Erfindung kann es insbesondere vorgesehen sein, dass der Sauerstoffgehalt in der ersten und zweiten Pyrolysezone B1 und B2 gesteuert und/oder kontrolliert wird derart, dass der Sauerstoffgehalt G(B1) in der ersten Pyrolysezone B1 unterstöchiometrisch in Bezug auf die zu zersetzende Kunststoffmatrix eingestellt wird und der Sauerstoffgehalt G(B2) in der zweiten Pyrolysezone B2 überstöchiometrisch in Bezug auf die zu zersetzende Kunststoffmatrix eingestellt wird. Erfindungsgemäß ist es somit bevorzugt, wenn die Zersetzung der Kunststoffmatrix des Kunststoffs in Anwesenheit niedriger Mengen an Sauerstoff in der ersten Pyrolysezone B1 und die Entfernung der Pyrolyserückstände in Anwesenheit hoher Mengen an Sauerstoff in der zweiten Pyrolysezone B2 durchgeführt wird. Insbesondere wird in der ersten Pyrolysezone B1 der Sauerstoffgehalt derart eingestellt, dass dieser in einer Menge vorliegt, welche geringer ist als die Menge an Sauerstoff, welche für die Verbrennung der gasförmigen Zersetzungsprodukte der Kunststoffmatrix benötigt wird; die geringe Menge an Sauerstoff in der ersten Pyrolysezone B1 ist erforderlich, um eine Oxidation der Kohlenstofffasern und somit eine teilweise oder vollständige Zerstörung der Kohlenstofffasern, welche in signifikant verschlechterten mechanischen Eigenschaften resultiert, zu vermeiden. Jedoch ist für die vollständige Verbrennung der Pyrolyserückstände auf der Oberfläche der rezyklierten Kohlenstofffasern in der zweiten Pyrolysezone B2 ein höherer Sauerstoffgehalt in der Atmosphäre in Bezug auf die zu zersetzende Kunststoffmatrix des Kunststoffs erforderlich.

Bevorzugt kann es erfindungsgemäß vorgesehen sein, dass der Sauerstoffgehalt während der Pyrolyse, vorzugsweise während des gesamten Verfahrens, insbesondere der Sauerstoffgehalt $G(B1)$ in der ersten Pyrolysezone B1 und der Sauerstoffgehalt $G(B2)$ in der zweiten Pyrolysezone B2, gesteuert und/oder kontrolliert wird, vorzugsweise durch Abziehen von aus der Zersetzung der Kunststoffmatrix stammenden Zersetzungsprodukten, insbesondere gasförmigen Zersetzungsprodukten, und/oder durch Zufuhr von Sauerstoff, bevorzugt in Form von Luft. Erfindungsgemäß wird der Sauerstoffgehalt in der ersten Pyrolysezone B1 und in der zweiten Pyrolysezone B2 durch Abziehen der gasförmigen Zersetzungsprodukte der Kunststoffmatrix des Kunststoffs gesteuert, so dass der Sauerstoffgehalt in der ersten Pyrolysezone B1 ausreichend hoch ist, um die Zersetzung und teilweise Verbrennung der Kunststoffmatrix des Kunststoffs zu ermöglichen, jedoch andererseits gering genug ist, um eine Zerstörung der Kohlenstofffasern durch Oxidation auf ein Mindestmaß zu beschränken oder ganz zu vermeiden. Weiterhin ist erfindungsgemäß der Sauerstoffgehalt in der zweiten Pyrolysezone B2 derart eingestellt, dass eine Verbrennung der Pyrolyserückstände auf der Oberfläche der rezyklierten Kohlenstofffasern gewährleistet ist und eine teilweise Oxidation der Oberfläche der rezyklierten Kohlenstofffasern erfolgt, ohne jedoch die rezyklierten Kohlenstofffasern zu zerstören. Die Einstellung des Sauerstoffgehalts in der ersten Pyrolysezone B1 und der zweiten Pyrolysezone B2 erfolgt erfindungsgemäß durch Abziehen der gasförmigen Zersetzungsprodukte der Kunststoffmatrix des Kunststoffs. Durch Abziehen der Verbrennungsgase entsteht eine Sogwirkung, aufgrund derer Luft durch die vorzugsweise offene Pyrolysevorrichtung in die jeweilige Zone strömt. Somit ist die Steuerung und/oder Kontrolle des Sauerstoffgehalts in der jeweiligen Pyrolysezone verfahrenstechnisch sehr leicht durchzuführen und erfordert keinen Einsatz von kostenintensiven Gasen, wie Sauerstoff.

In diesem Zusammenhang kann es vorgesehen sein, dass der Sauerstoffgehalt während der Pyrolyse, vorzugsweise während des gesamten Verfahrens, insbesondere der Sauerstoffgehalt $G(B1)$ in der ersten Pyrolysezone B1 und der Sauerstoffgehalt $G(B2)$ in der zweiten Pyrolysezone B2, über Sauerstofferfassungseinrichtungen, insbesondere sauerstoffsensitive Sensoren und/oder Drucksonden, erfasst wird. Dabei kann insbesondere mittels der Sauerstofferfassungseinrichtungen der Sauerstoffgehalt durch Abziehen von aus der Zersetzung der Kunststoffmatrix stammenden Zersetzungsprodukten, bevorzugt mittels Entlüftungseinrichtungen, und/oder durch Zufuhr von Sauerstoff gesteuert und/oder kontrolliert werden. Im Rahmen der vorliegenden Erfindung kann der Sauerstoffgehalt in der ersten Pyrolysezone B1 und der zweiten Pyrolysezone B2 über Sensoren und/oder Drucksonden, wie Pitotrohre, erfasst werden. Der ermittelte Sauerstoffgehalt dient im Rahmen der vorliegenden Erfindung zur Steuerung von Entlüftungseinrichtungen in Abhängigkeit des ermittelten Sauerstoffgehalts und des Sollwerts des Sauerstoffgehalts in der jeweiligen Pyrolysezone. So kann der Sauerstoffgehalt durch Öffnen von Entlüftungseinrichtungen und Abziehen von gasförmigen Verbrennungsgasen in der ersten und der zweiten Pyrolysezone erhöht werden, da durch Abziehen der gasförmigen Zersetzungsprodukte aufgrund der entstehenden Sogwirkung und der erfindungsgemäß eingesetzten offenen Pyrolysevorrichtung P Luft aus der Umgebung in die jeweilige Pyrolysezone strömt. Durch die Erhöhung des Sauerstoffgehalts in der Atmosphäre der jeweiligen Pyrolysezone wird sowohl die Verbrennung der Kunststoffmatrix als auch der Pyrolyserückstände an der Oberfläche der rezyklierten Kohlenstofffasern gefördert. Es erfolgt jedoch auch eine vermehrte Oxidation an der Oberfläche der rezyklierten Kohlenstofffasern.

Gemäß einer bevorzugten Ausführungsform der vorliegenden Erfindung wird der Sauerstoffgehalt während der Pyrolyse, vorzugsweise während des gesamten Verfahrens, insbesondere der Sauerstoffgehalt $G(B1)$ in der ersten Pyrolysezone B1 und der Sauerstoffgehalt $G(B2)$ in der zweiten Pyrolysezone B2, gesteuert und/oder kontrolliert derart, dass in der ersten Pyrolysezone B1 zumindest im Wesentlichen selektiv nur die Kunststoffmatrix pyrolysiert und in der zweiten Pyrolysezone B2 zumindest im Wesentlichen selektiv nur die nach der ersten Pyrolysezone B1 noch verbleibende Kunststoffmatrix und Pyrolyserückstände entfernt und die Oberfläche der auf diese Weise rezyklierten Kohlenstofffasern zumindest teilweise oxidiert wird. Durch die Steuerung des Sauerstoffgehalts in der ersten und der zweiten Pyrolysezone B1 und B2 kann die Kunststoffmatrix des Kunststoffs selektiv pyrolysiert werden, d. h. in Anwesenheit eines gewissen Sauerstoffgehalts selektiv thermal zersetzt werden, ohne dass jedoch eine übermäßige Oxidation der Oberfläche der rezyklierten Kohlenstofffasern stattfindet. Durch die reduzierte Menge an Sauerstoff in der ersten Pyrolysezone B1 wird die thermale Zersetzung der Kunststoffmatrix des Kunststoffs nicht beeinflusst, jedoch findet eine reduzierte Verbrennung der gasförmigen Zersetzungsprodukte des Kunststoffs der Kunststoffmatrix sowie nur eine geringe Oxidation der Kohlenstofffasern statt. In der zweiten Pyrolysezone B2 wird der Sauerstoffgehalt derart eingestellt, dass noch verbleibende Kunststoffmatrix des Kunststoffs sowie in der ersten Pyrolysezone B1 gebildete Pyrolyserückstände auf der Oberfläche der rezyklierten Kohlenstofffasern entfernt werden. Aufgrund der höheren Menge an Sauerstoff in der zweiten Pyrolysezone B2 findet dort zudem eine zumindest teilweise Oxidation der Oberfläche der rezyklierten Kohlenstofffasern statt, welche gleichzeitig zu einer verbesserten Benetzbarkeit infolge der hydrophileren und rauheren Oberfläche führt.

Wie zuvor beschrieben, kann es erfindungsgemäß insbesondere vorgesehen sein, dass die Temperatur T(B2) in der zweiten Pyrolysezone B2 gegenüber der Temperatur T(B1) in der ersten Pyrolysezone B1 erhöht wird.

Erfindungsgemäß kann es in diesem Zusammenhang vorgesehen sein, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht wird. Um die im Wesentlichen vollständige Entfernung der Pyrolyserückstände auf der Oberfläche der rezyklierten Kohlenstofffasern in der zweiten Pyrolysezone B2 zu gewährleisten, kann in der zweiten Pyrolysezone B2 eine höhere Temperatur T(B2) gewählt werden als in der ersten Pyrolysezone B1, da bei erhöhten Temperaturen, insbesondere in Kombination mit höheren Sauerstoffgehalten, eine zumindest im Wesentlichen vollständige Entfernung der Pyrolyserückstände auf der Oberfläche der rezyklierten Kohlenstofffasern gewährleistet ist. Jedoch sollte die Temperatur einen gewissen Maximalwert nicht überschreiten, da andernfalls die rezyklierten Kohlenstofffasern übermäßig oxidieren und infolge der dabei auftretenden, zumindest teilweisen Zerstörung der rezyklierten Kohlenstofffasern auch deren mechanische Stabilität signifikant verringert werden könnte.

Insbesondere kann es vorgesehen sein, dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht wird.

Bevorzugt kann es erfindungsgemäß vorgesehen sein, dass die Temperatur T(B1) in der ersten Pyrolysezone B1 im Bereich von 375 °C bis 475 °C, insbesondere im Bereich von 390 °C bis 465 °C, vorzugsweise im Bereich von 415 °C bis 455 °C, besonders bevorzugt im Bereich von 430 °C bis 445 °C, eingestellt wird und die Temperatur T(B2) in der zweiten Pyrolysezone B2 im Bereich von 450 °C bis 750 °C, insbesondere im Bereich von 480 °C bis 690 °C, vorzugsweise im Bereich von 510 °C bis 675 °C, besonders bevorzugt im Bereich von 515 °C bis 650 °C, eingestellt wird, jedoch mit der Maßgabe, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht wird und/oder dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht wird. Die erste Pyrolysezone B1 dient dazu, selektiv die Kunststoffmatrix des Kunststoffs zu zersetzen und die dabei entstehenden gasförmigen Zersetzungsprodukte mit in der Atmosphäre der Pyrolysezone B1 vorhandenem Sauerstoff zumindest teilweise zu verbrennen; aufgrund der geringen Mengen an Sauerstoff in der Atmosphäre der ersten Pyrolysezone B1 erfolgt eine verzögerte Zersetzung der Kunststoffmatrix des Kunststoffs, so dass sich Pyrolyserückstände auf der Oberfläche der Kohlenstofffasern bilden. Diese Pyrolyserückstände müssen in einer zweiten Pyrolysezone B2 bei höheren Temperaturen als in der ersten Pyrolysezone B1 entfernt werden, wobei eine übermäßige Oxidation der rezyklierten Kohlenstofffasern - wie zuvor ausgeführt - durch die Einstellung einer definierten Temperatur und eines definierten Sauerstoffgehalts vermieden wird.

In diesem Zusammenhang kann es vorgesehen sein, dass die Temperatur während der Pyrolyse, vorzugsweise während des gesamten Verfahrens, insbesondere die Temperatur T(B1) in der ersten Pyrolysezone B1 und die Temperatur T(B2) in der zweiten Pyrolysezone B2, gesteuert und/oder kontrolliert wird, vorzugsweise über Temperaturerfassungseinrichtungen, insbesondere temperatursensitive Sensoren. Die Steuerung der Temperatur in der ersten und der zweiten Pyrolysezone B1 und B2 mittels temperatursensitiver Sensoren ist empfehlenswert, um zum einen die selektive Pyrolyse der Kunststoffmatrix des Kunststoffs in der erste Pyrolysezone B1 zu gewährleisten und andererseits die vollständige Entfernung der Pyrolyserückstände auf der Oberfläche der rezyklierten Kohlenstofffasern in der zweiten Pyrolysezone B2 sicherzustellen. In diesem Zusammenhang sollte daher eine definierte Steuerung der Temperaturen T(B1) und T(B2) in der ersten und zweiten Pyrolysezone B1 und B2 sichergestellt sein, um eine übermäßige Oxidation und/oder Zerstörung der Kohlenstofffasern, welche in einer signifikant reduzierten mechanischen Stabilität der rezyklierten Kohlenstofffasern resultieren würde, zu vermeiden.

Erfindungsgemäß bevorzugt kann es vorgesehen sein, dass die Temperatur während der Pyrolyse, vorzugsweise während des gesamten Verfahrens, insbesondere die Temperatur T(B1) in der ersten Pyrolysezone B1 und die Temperatur T(B2) in der zweiten Pyrolysezone B2, gesteuert und/oder kontrolliert wird derart, dass in der ersten Pyrolysezone B1 zumindest im Wesentlichen selektiv nur die Kunststoffmatrix pyrolysiert und in der zweiten Pyrolysezone B2 zumindest im Wesentlichen selektiv nur die nach der ersten Pyrolysezone B1 noch verbleibende Kunststoffmatrix und Pyrolyserückstände entfernt und die Oberfläche der auf diese Weise rezyklierten Kohlenstofffasern zumindest teilweise oxidiert wird.

Erfindungsgemäß wird der Sauerstoffgehalt G(B2) in der zweiten Pyrolysezone B2 gegenüber dem Sauerstoffgehalt G(B1) in der ersten Pyrolysezone B1 erhöht und die Temperatur T(B2) in der zweiten Pyrolysezone B2 gegenüber der Temperatur T(B1) in der ersten Pyrolysezone B1 erhöht. In diesem Zusammenhang ist es gemäß der vorliegenden Erfindung bevorzugt, wenn der Sauerstoffgehalt G(B1) in der ersten Pyrolysezone B1 im Bereich von 0,1 Vol.-% bis 12 Vol.-%, insbesondere im Bereich von 0,5 Vol.-% bis 10 Vol.-%, vorzugsweise im Bereich von 0,75 Vol.-% bis 6 Vol.-%, besonders bevorzugt im Bereich von 1 Vol.-% bis 4 Vol.-%, eingestellt wird und der Sauerstoffgehalt G(B2) in der zweiten Pyrolysezone B2 im Bereich von 2 Vol.-% bis 30 Vol.-%, insbesondere im Bereich von 3 Vol.-% bis 20 Vol.-%, vorzugsweise im Bereich von 5 Vol.-% bis 17 Vol.-%, besonders bevorzugt im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht wird und/oder dass der Sauerstoffgehalt G(B2) in der zweiten Pyrolysezone B2 gegenüber dem Sauerstoffgehalt G(B1) in der ersten Pyrolysezone B1 um 3 Vol.-% bis 15 Vol.-%, insbesondere um 5 Vol.-% bis 15 Vol.-%, vorzugsweise um 7,5 Vol.-% bis 15 Vol.-%, besonders bevorzugt um 10 Vol.-% bis 15 Vol.-%, erhöht wird. Weiterhin ist es gemäß der vorliegenden Erfindung in diesem Zusammenhang bevorzugt, wenn die Temperatur T(B1) in der ersten Pyrolysezone B1 im Bereich von 375 °C bis 475 °C, insbesondere im Bereich von 390 °C bis 465 °C, vorzugsweise im Bereich von 415 °C bis 455 °C, besonders bevorzugt im Bereich von 430 °C bis 445 °C, eingestellt wird und die Temperatur T(B2) in der zweiten Pyrolysezone B2 im Bereich von 450 °C bis 750 °C, insbesondere im Bereich von 480 °C bis 690 °C, vorzugsweise im Bereich von 510 °C bis 675 °C, besonders bevorzugt im Bereich von 515 °C bis 650 °C, eingestellt wird, jedoch mit der Maßgabe, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht wird und/oder dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht wird.

Im Rahmen der vorliegenden Erfindung ist vorgesehen, dass der Sauerstoffgehalt G(B2) in der zweiten Pyrolysezone B2 gegenüber dem Sauerstoffgehalt G(B1) in der ersten Pyrolysezone B1 erhöht wird und die Temperatur T(B2) in der zweiten Pyrolysezone B2 gegenüber der Temperatur T(B1) in der ersten Pyrolysezone B1 erhöht wird. In diesem Zusammenhang kann es weiterhin vorgesehen sein, dass der Sauerstoffgehalt G(B1) in der ersten Pyrolysezone B1 im Bereich von 0,75 Vol.-% bis 6 Vol.-% eingestellt wird und der Sauerstoffgehalt G(B2) in der zweiten Pyrolysezone B2 im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-% bis 13 Vol.-% erhöht wird. Weiterhin ist es in diesem Zusammenhang erfindungsgemäß bevorzugt, wenn die Temperatur T(B1) in der ersten Pyrolysezone B1 im Bereich von 375 °C bis 475 °C eingestellt wird und die Temperatur T(B2) in der zweiten Pyrolysezone B2 im Bereich von 450 °C bis 750 °C eingestellt wird, jedoch mit der Maßgabe, dass die Temperatur T(B2) in der zweiten Pyrolysezone B2 gegenüber der Temperatur T(B1) in der ersten Pyrolysezone B1 um 50 °C bis 250 °C erhöht wird.

Wie bereits vorstehend erläutert, führt die erfindungsgemäße Verfahrensführung, insbesondere die kontrollierte Erhöhung des Sauerstoffgehalts G(B2) und/oder der Temperatur T(B2) in der zweiten Pyrolysezone B2 zu rezyklierten Kohlenstofffasern, welche zumindest im Wesentlichen keine Pyrolyserückstände mehr aufweisen und welche aufgrund einer teilweisen Oxidation der Oberfläche eine hydrophilere und rauhere Oberfläche im Vergleich zu Kohlenstoffprimärfasern oder herkömmlich rezyklierten Kohlenstofffasern aufweisen. Dies führt zu einer besseren Benetzbarkeit und Einarbeitbarkeit der aus der erfindungsgemäßen Verfahrensführung resultierenden rezyklierten Kohlenstofffasern in Kunststoffe im Vergleich zu Kohlenstoffprimärfasern oder herkömmlich rezyklierten Kohlenstofffasern. Gleichzeitig wird die Oxidation der Oberfläche erfindungsgemäß jedoch gezielt gesteuert derart, dass die mechanischen Eigenschaften, insbesondere die mechanische Stabilität, der rezyklierten Kohlenstofffasern im Vergleich zu denen von Kohlenstoffprimärfasern im Wesentlichen unverändert bleiben.

Im Allgemeinen kann die Verweildauer des zu rezyklierenden Gegenstands in weiten Bereichen variieren:

Insbesondere liegt die Verweildauer VD(B1) des zu rezyklierenden Gegenstands in der ersten Pyrolysezone B1 im Bereich von 0,1 bis 60 Minuten, insbesondere im Bereich 0,5 bis 30 Minuten, vorzugsweise im Bereich von 0,75 bis 15 Minuten, besonders bevorzugt im Bereich von 1 bis 10 Minuten, ganz besonders bevorzugt im Bereich von 1 bis 8 Minuten. Die Verweildauer in der ersten Pyrolysezone B1 ist insbesondere ausreichend, um zumindest im Wesentlichen eine vollständige Entfernung der Kunststoffmatrix des Kunststoffs zu gewährleisten; jedoch sollte die Verweildauer in der ersten Pyrolysezone B1 eine gewisse Zeit nicht überschreiten, um eine Oxidation der Kohlenstofffasern sowie übermäßig lange Prozesszeiten und somit unökonomische Prozessdauern zu vermeiden. Die Verweildauer VD(B1) kann beispielsweise durch die Beförderungsgeschwindigkeit der zu rezyklierenden Gegenstände innerhalb der ersten Pyrolysezone B1 und/oder durch die räumliche Länge bzw. Ausdehnung der ersten Pyrolysezone B1 eingestellt werden.

Weiterhin kann es erfindungsgemäß insbesondere vorgesehen sein, dass die Verweildauer VD(B2) des zu rezyklierenden Gegenstands in der zweiten Pyrolysezone B2 im Bereich von 0,01 bis 30 Minuten, insbesondere im Bereich von 0,1 bis 12 Minuten, vorzugsweise im Bereich von 0,5 bis 7,5 Minuten, besonders bevorzugt im Bereich von 1 bis 6 Minuten, ganz besonders bevorzugt im Bereich von 2 bis 5 Minuten, liegt. Erfindungsgemäß ist es von Vorteil, wenn die Verweildauer in der zweiten Pyrolysezone B2 derart gesteuert wird, dass einerseits eine übermäßige Oxidation der Oberfläche der rezyklierten Kohlenstofffasern bei erhöhten Temperaturen vermieden wird, andererseits jedoch die Pyrolyserückstände zumindest im Wesentlichen entfernt werden. Da die Verweildauern insbesondere von der Temperatur und/oder dem Sauerstoffgehalt abhängig sind, sollte bei niedrigen Temperaturen und/oder niedrigen Sauerstoffgehalten eine erhöhte Verweildauer verwendet werden, während höhere Temperaturen und/oder höhere Sauerstoffgehalte in einer niedrigeren Verweildauer resultieren. Zudem ist die Verweildauer in den jeweiligen Pyrolysezonen B1 und B2 insbesondere auch abhängig von den Dimensionen bzw. Größenausdehnungen sowie der Zusammensetzung des zu rezyklierenden Gegenstands. Insbesondere können voluminöse Gegenstände oder harzgetränkte Gegenstände zu einer erhöhten Verweildauer in der ersten und/oder zweiten Pyrolysezone B1 und B2 führen, um zum einen eine vollständige Entfernung der Kunststoffmatrix des Kunststoffs sowie zum anderen eine vollständige Entfernung der Pyrolyserückstände auf der Oberfläche der rezyklierten Kohlenstofffasern zu gewährleisten. Die Verweildauer VD(B2) kann beispielsweise durch die Beförderungsgeschwindigkeit der zu rezyklierenden Gegenstände innerhalb der zweiten Pyrolysezone B2 und/oder durch die räumliche Länge bzw. Ausdehnung der zweiten Pyrolysezone B2 eingestellt werden.

In diesem Zusammenhang kann es erfindungsgemäß vorgesehen sein, dass das Verhältnis Q der Verweildauer VD(B1) des zu rezyklierenden Gegenstands in der ersten Pyrolysezone B1 zu der Verweildauer VD(B2) des zu rezyklierenden Gegenstands in der zweiten Pyrolysezone B2 mindestens 1,05, insbesondere mindestens 1,1, vorzugsweise mindestens 1,2, bevorzugt mindestens 1,3, besonders bevorzugt mindestens 1,5, und/oder höchstens 4, insbesondere höchstens 3,5, vorzugsweise höchstens 3, bevorzugt höchstens 2,75, besonders bevorzugt höchstens 2,5, beträgt. Höhere Verweildauern in der ersten Pyrolysezone B1 im Vergleich zur zweiten Pyrolysezone B2 können insbesondere dadurch erreicht werden, dass die Pyrolysezone B1 eine größere räumliche Länge bzw. Ausdehnung aufweist als die Pyrolysezone B2 und/oder dass die Beförderungsgeschwindigkeit der zu rezyklierenden Gegenstände in der ersten Pyrolysezone B1 größer ist als in der zweiten Pyrolysezone B2.

In erfindungsgemäß bevorzugter Weise kann das Verhältnis Q der Verweildauer VD(B1) des zu rezyklierenden Gegenstands in der ersten Pyrolysezone B1 zu der Verweildauer VD(B2) des zu rezyklierenden Gegenstands in der zweiten Pyrolysezone B2 der folgenden Gleichung genügen:

$$1,05 \leq Q \leq 4, \text{ insbesondere } 1,1 \leq Q \leq 3,5, \text{ vorzugsweise } 1,2 \leq Q \leq 3,$$
$$\text{bevorzugt } 1,3 \leq Q \leq 2,75, \text{ besonders bevorzugt } 1,5 \leq Q \leq 2,5$$

Darüber hinaus kann es erfindungsgemäß vorgesehen sein, dass die Verweildauer des zu rezyklierenden Gegenstands in der Aufwärmzone A im Bereich von 0,05 bis 20 Minuten, insbesondere im Bereich von 0,1 bis 15 Minuten, vorzugsweise im Bereich von 0,5 bis 10 Minuten, besonders bevorzugt im Bereich von 1 bis 5 Minuten, ganz besonders bevorzugt im Bereich von 1,5 bis 4 Minuten, liegt. In diesem Zusammenhang kann es erfindungsgemäß vorgesehen sein, dass die Temperatur in der Aufwärmzone A im Bereich von 50 °C bis 350 °C, insbesondere 100 °C bis 325 °C, vorzugsweise 150 °C bis 300 °C, besonders bevorzugt 205 °C bis 295 °C, liegt. Die Verwendung einer Aufwärmzone A ist von Vorteil, da das zu rezyklierende Material bereits auf eine gewisse Temperatur vorgewärmt wird und somit in der ersten Pyrolysezone B1 sehr schnell eine gleichmäßige Temperatur des zu rezyklierenden Gegenstands erreicht wird. Dies gewährleistet eine gleichmäßige Entfernung der Kunststoffmatrix des Kunststoffs bei kürzeren Verweildauern und somit auch eine gleichbleibende Qualität der rezyklierten Kohlenstofffasern, da eine ungleichmäßige Entfernung der Kunststoffmatrix infolge von starken Temperaturgradienten vermieden wird. Weiterhin können durch die Verwendung einer Aufwärmzone A die Prozesszeiten des erfindungsgemäßen Verfahrens signifikant reduziert werden, da durch die Aufwärmung des zu rezyklierenden Gegenstands auf eine gewisse Temperatur kürzere Verweilzeiten in der ersten Pyrolysezone B1 ermöglicht werden.

Zudem kann erfindungsgemäß die Verweildauer der rezyklierten Kohlenstofffasern in der Abkühlzone C im Bereich von 0,1 bis 30 Minuten, insbesondere im Bereich von 0,5 bis 25 Minuten, vorzugsweise im Bereich von 1 bis 20 Minuten, besonders bevorzugt im Bereich von 5 bis 18 Minuten, ganz besonders bevorzugt im Bereich von 7,5 bis 15 Minuten, liegen. Insbesondere kann in diesem Zusammenhang die Temperatur in der Abkühlzone C im Bereich von 10 °C bis 350 °C, insbesondere 20 °C bis 250 °C, vorzugsweise 25 °C bis 200 °C, besonders bevorzugt 30 °C bis 150 °C, liegen. Die Abkühlzone C dient zum Abkühlen der rezyklierten Kohlenstofffasern, so dass eine schnelle Weiterverarbeitung, insbesondere Zerkleinerung, Verpackung und/oder Lagerung, gewährleistet ist. Die Abkühlzone C kann beispielsweise mit Wasser gekühlt werden; alternativ kann zur Kühlung auch Luft verwendet werden, welche beispielsweise in die Abkühlzone C eingeblasen wird.

Was das erfindungsgemäße Verfahren weiterhin anbelangt, so kann das erfindungsgemäße Verfahren grundsätzlich kontinuierlich oder diskontinuierlich, bevorzugt kontinuierlich, durchgeführt werden. Die kontinuierliche Durchführung des erfindungsgemäßen Verfahrens erlaubt einen energiesparenden und somit ökonomischen Prozess, da das Aufrechterhalten einer kontinuierlichen Temperatur wirtschaftlicher ist. Weiterhin werden durch eine kontinuierliche Verfahrensführung Wärmeschwankungen in den Pyrolysezonen B1 und B2, welche einen nachteiligen Einfluss auf die Qualität der rezyklierten Kohlenstofffasern sowie auf die Lebenszeit der Pyrolysevorrichtung P haben könnten, vermieden. Zudem erlaubt die kontinuierliche Verfahrensführung eine direkte Verarbeitung der zu rezyklierenden Gegenstände ohne aufwendige Lagerung des zu rezyklierenden Materials. Gemäß einer erfindungsgemäß bevorzugten Ausführungsform ist die Pyrolysevorrichtung P als Ofen ausgebildet. In diesem Zusammenhang kann es erfindungsgemäß vorgesehen sein, dass der Ofen ausgebildet ist als Band- oder Durchlaufofen, Vertikalofen, Kettentransportofen, Haubenofen, Hubbalkenofen, Kammerofen, Lötofen, Retortenofen, Schaftofen, Drehrohrofen oder Stoßofen, vorzugsweise als Band- oder Durchlaufofen oder Drehrohrofen.

Zur Durchführung des erfindungsgemäßen Verfahrens eignen sich insbesondere die in den Druckschriften WO 03/089212 A1, US 2006/246391 A1, DE 2810043 A1, US 402 027 A, AT E 512 775 T1 bzw. US 2010/189629 A1, EP 2 282 879 A1, WO 2010/075952 A1, EP 1 243 663 B1, EP 2 255 940 A1, WO 2010/053381 A1 und DE 10 2005 001 569 B4 beschriebenen Pyrolysevorrichtungen bzw. Öfen.

Weiterhin kann es gemäß der vorliegenden Erfindung vorgesehen sein, dass die Pyrolysevorrichtung P, welche insbesondere zwischen der ersten Pyrolysezone B1 und der zweiten Pyrolysezone B2 angeordnet ist, mindestens eine weitere Pyrolysezone, insbesondere mindestens zwei weitere Pyrolysezonen, bevorzugt mindestens drei weitere Pyrolysezonen, aufweist. In diesem Zusammenhang kann es erfindungsgemäß auch vorgesehen sein, dass die Pyrolysevorrichtung P, insbesondere zwischen der ersten Pyrolysezone B1 und der zweiten Pyrolysezone B2 angeordnet, 1 bis 10 weitere Pyrolysezonen, insbesondere 2 bis 8 weitere Pyrolysezonen, vorzugsweise 3 bis 7 weitere Pyrolysezonen, bevorzugt 4 bis 6 weitere Pyrolysezonen, aufweist.

Im Zusammenhang mit der Erfindung ist es bevorzugt, wenn eine oder mehrere Zonen der Pyrolysevorrichtung P, vorzugsweise alle Zonen der Pyrolysevorrichtung, physikalisch nicht getrennt sind und/oder ineinander übergehen oder aber wobei eine oder mehrere Zonen der Pyrolysevorrichtung P, insbesondere die erste Pyrolysezone B1 und die zweite Pyrolysezone B2, physikalisch getrennt sind, insbesondere durch eine oder mehrere Schleusen.

Weiterhin kann es im Rahmen der vorliegenden Erfindung vorgesehen sein, dass der zu behandelnde und/oder zu rezyklierende Gegenstand vor der Aufwärmzone A einer Vorbehandlung, insbesondere einer Zerkleinerung, unterzogen wird. Es kann von Vorteil sein, wenn der zu rezyklierende Gegenstand vor der Aufwärmzone A einer Zerkleinerung unterzogen wird, um die maximale Größe des zu rezyklierenden Gegenstands den Dimensionen der Öffnung der Pyrolysevorrichtung P anzupassen. Insbesondere hängt somit die Größe des eingesetzten zu rezyklierenden Gegenstands von den Dimensionen der Pyrolyseeinrichtung P ab. Es kann jedoch auch vorgesehen sein, dass der zu rezyklierende Gegenstand auf eine geringere Größe zerkleinert wird, als sie die verwendete Pyrolyseeinrichtung P erfordern würde.

In diesem Zusammenhang kann es weiterhin vorgesehen sein, dass die aus dem Verfahren und/oder nach der Abkühlzone C resultierenden rezyklierten Fasern einer Nachbehandlung, insbesondere einer Zerkleinerung, vorzugsweise mittels Schneiden, Hacken, Mahlen und/oder Häckseln, und/oder insbesondere einem Inkontaktbringen mit mindestens einem Behandlungsmittel, vorzugsweise ausgewählt aus Schlichtmitteln, Dispergiermitteln, Entschäumern und Bindemitteln sowie deren Mischungen oder Kombinationen, unterzogen werden. Die Nachbehandlung, insbesondere Zerkleinerung, der rezyklierten Kohlenstofffasern kann in hierfür üblichen, dem Fachmann an sich bekannten Schneidevorrichtungen erfolgen, wobei das Zerkleinern grundsätzlich mittels Nass- oder Trockenverfahren durchgeführt werden kann. Durch mehrfache Zerkleinerung, insbesondere mehrfaches Hacken, können die Faserlängen der rezyklierten Kohlenstofffasern auf die gewünschte Faserlänge eingestellt werden. In diesem Zusammenhang kann es auch vorgesehen sein, dass zur Herstellung von gemahlenen rezyklierten Kohlenstofffasern zuvor gehackte Kohlenstofffasern verwendet werden; die gemahlenen Kohlenstofffasern können durch Vermahlen der gehackten Kohlenstofffasern, insbesondere unter Verwendung von Mühlen, wie Hammermühlen, Pralltellermühlen, Siebkorbmühlen oder dergleichen, erhalten werden. Weiterhin können die rezyklierten Kohlenstofffasern, insbesondere die Oberfläche der rezyklierten Kohlenstofffasern, mit einem Behandlungsmittel versetzt werden, um die Eigenschaften der rezyklierten Kohlenstofffasern an die Eigenschaften der Matrix anzupassen und somit deren Einarbeitbarkeit in Kunststoffe, Baustoffe oder zementäre Systeme zu verbessern.

Gemäß dem erfindungsgemäßen Verfahren sind rezyklierte Kohlenstofffasern erhältlich.

Die erfindungsgemäße Verfahrensführung schlägt sich unmittelbar in den durch das erfindungsgemäße Verfahren erhältlichen rezyklierten Kohlenstofffasern nieder. Aufgrund der erfindungsgemäßen Verfahrensführung, insbesondere der teilweisen Oxidation der Oberfläche der pyrolytisch hergestellten rezyklierten Kohlenstofffasern, weisen diese eine rauhere Oberfläche, insbesondere auch Rillen, Riefen, Furchen, Vertiefungen oder dergleichen, auf. Weiterhin ist die Oberfläche der erfindungsgemäßen rezyklierten Kohlenstofffasern aufgrund der teilweisen Oxidation hydrophiler als die Oberfläche von Kohlenstoffprimärfasern oder von herkömmlich rezyklierten Kohlenstofffasern. Die rauhere und hydrophilere Oberfläche der rezyklierten Kohlenstofffasern führt überraschenderweise zu einer verbesserten Benetzbarkeit und damit auch zu einer verbesserten Einarbeitbarkeit in Kunststoffe im Vergleich zu Kohlenstoffprimärfasern oder herkömmlich rezyklierten Kohlenstofffasern.

Gemäß einer bevorzugten Ausführungsform der vorliegenden Erfindung weisen die rezyklierten Kohlenstofffasern eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, von höchstens 75°, insbesondere höchstens 73°, vorzugsweise höchstens 70°, besonders bevorzugt höchstens 68°, noch mehr bevorzugt höchstens 65°, ganz besonders bevorzugt höchstens 60°, auf.

In diesem Zusammenhang kann es insbesondere vorgesehen sein, dass die rezyklierten Kohlenstofffasern eine Benetzbarkeit gegenüber Wasser, bestimmt als tensiometrisch gemessener Kontaktwinkel gemäß der Wilhelmy-Methode mittels Einzelfasermessung bei (23 ± 0,5) °C, im Bereich von 30° bis 75°, insbesondere 35° bis 73°, vorzugsweise 38° bis 70°, besonders bevorzugt 40° bis 68°, noch mehr bevorzugt 45° und 65°, ganz besonders bevorzugt 50° bis 60°, aufweisen.

Die Bestimmung der Benetzbarkeit der rezyklierten Kohlenstofffasern erfolgt mittels eines Tensiometers gemäß der Wilhelmy-Methode als Einzelfasermessung bei (23 ± 0,5) °C gegenüber Wasser. Bezüglich der Wilhelmy-Methode kann insbesondere auf Abe K., Onishi S., Akijama H., Takiguchi H., Tamada K., Journal of the Surface Science Society of Japan, 2000, 21, Seiten 643 bis 650, sowie auf Baskom W. D., The Wetting Behavior of Fibers, in: Schrader M., Loeb G. Modern Approaches to Wettability: Theory and Applications; Plenum Press, New York 1992, Seiten 359 bis 373 verwiesen werden. Zudem wird für eine detaillierte Beschreibung der Kontaktwinkelmessungen gemäß der Wilhelmy-Methode auch auf die nachfolgenden Ausführungsbeispiele zu der vorliegenden Erfindung verwiesen.

Im Zusammenhang mit der Erfindung ist es bevorzugt, wenn die rezyklierten Kohlenstofffasern einen Anteil an Pyrolyserückständen (Verkokungsrückständen) von weniger als 5 Gew.-%, insbesondere von weniger als 4 Gew.-%, bevorzugt von weniger als 3 Gew.-%, weiter bevorzugt von weniger als 2 Gew.-%, noch mehr bevorzugt von weniger als 1 Gew.-%, besonders bevorzugt von weniger als 0,9 Gew.-%, am meisten bevorzugt von weniger als 0,5 Gew.-%, bezogen auf die rezyklierten Kohlenstofffasern, aufweisen.

Insbesondere ist es erfindungsgemäß bevorzugt, dass die rezyklierten Kohlenstofffasern einen Anteil an Pyrolyserückständen (Verkokungsrückständen) im Bereich von 0,001 bis 5 Gew.-%, insbesondere im Bereich von 0,01 bis 4 Gew.-%, vorzugsweise im Bereich von 0,05 bis 3 Gew.-%, bevorzugt im Bereich von 0,1 bis 0,95 Gew.-%, bezogen auf die rezyklierten Kohlenstofffasern, aufweisen, insbesondere gravimetrisch, vorzugsweise mittels Thermogravimetrie bestimmt. Ein hoher Anteil an Pyrolyserückständen an der Oberfläche der rezyklierten Kohlenstofffasern führt einerseits zu einer verschlechterten Einarbeitbarkeit in Kunststoffe, Baustoffe oder zementäre Systeme und andererseits zu einer signifikanten Reduzierung der elektrischen Eigenschaften der rezyklierten Kohlenstofffasern. Aus diesem Grund ist es erfindungsgemäß vorgesehen, dass die erfindungsgemäßen rezyklierten Kohlenstofffasern einen äußerst geringen Anteil an Pyrolyserückständen aufweisen, um eine hervorragende Einarbeitbarkeit und hervorragende elektrische Eigenschaften zu erhalten. Die Pyrolyserückstände können mittels gravimetrischer Analyse, insbesondere mittels thermogravimetrischer Analyse (TGA), bestimmt werden, wobei die thermogravimetrische Analyse (TGA) bevorzugt ist. Für eine detaillierte Beschreibung der gravimetrischen und der thermogravimetrischen Analyse (TGA) kann auf die erfindungsgemäßen Ausführungsbeispiele verwiesen werden.

Darüber hinaus kann es im Rahmen der vorliegenden Erfindung vorgesehen sein, dass die rezyklierten Kohlenstofffasern an ihrer Oberfläche sauerstoffhaltige funktionelle Gruppen aufweisen, insbesondere polare und/oder hydrophile Gruppen, insbesondere ausgewählt aus Phenol-, Carboxyl-, Carbonyl-, Aldehyd-, Keto-, Hydroxy- und/oder Oxogruppen, insbesondere bestimmt mittels Elektronenspektroskopie zur chemischen Analyse (ESCA), vorzugsweise mittels Röntgenphotoelektronenspektroskopie (XPS). Die sauerstoffhaltigen funktionellen Gruppen an der Oberfläche der rezyklierten Kohlenstofffasern, welche aus der erfindungsgemäßen Verfahrensführung resultieren, führen zu einer hydrophileren Oberfläche der rezyklierten Kohlenstofffasern, welche folglich eine bessere Benetzbarkeit im Vergleich zu hydrophoberen Kohlenstoffprimärfasern oder herkömmlich rezyklierten Kohlenstofffasern aufweisen. Die sauerstoffhaltigen funktionellen Gruppen an der Oberfläche der rezyklierten Kunststofffasern können insbesondere mittels Elektronenspektroskopie zur chemischen Analyse (ESCA), vorzugsweise mittels Röntgenphotoelektronenspektroskopie (XPS), bestimmt werden. Für weitergehende Informationen bezüglich der Durchführung von ESCA- und XPS-Messungen kann auf Levsen K., Physikalische Methoden der Chemie: ESCA, Chemie in unserer Zeit, 10, 1976, Seiten 48 bis 53, sowie auf die erfindungsgemäßen Ausführungsbeispiele verwiesen werden.

Weiterhin kann es vorgesehen sein, dass die rezyklierten Kohlenstofffasern an ihrer Oberfläche Rillen, Riefen, Vertiefungen, Furchen, Kratzer, Krater oder dergleichen aufweisen. Das erfindungsgemäße Verfahren resultiert in rezyklierten Kohlenstofffasern, welche im Gegensatz zu Kohlenstoffprimärfasern keine glatte Oberfläche aufweisen. Dies ist durch die erfindungsgemäße Verfahrensführung bedingt, insbesondere durch die Oxidation der Oberfläche der rezyklierten Kohlenstofffasern während der Entfernung der Pyrolyserückstände. Die rauhere Oberfläche der rezyklierten Kohlenstofffasern ist - neben der Anwesenheit der hydrophilen Gruppen - ein Grund für die gute Benetzbarkeit der rezyklierten Kohlenstofffasern, welche durch das erfindungsgemäße Verfahren erhalten werden.

Im Allgemeinen kann die Faserlänger der rezyklierten Kohlenstofffasern im unzerkleinerten Zustand in weiten Bereichen variieren. Insbesondere weisen die rezyklierten Kohlenstofffasern im unzerkleinerten Zustand eine Faserlänge im Bereich von 0,01 bis 5 m, insbesondere im Bereich von 0,05 bis 3 m, vorzugsweise im Bereich von 0,1 bis 2 m, bevorzugt im Bereich von 0,2 bis 1 m, auf. Die Dimensionen der durch das erfindungsgemäße Verfahren erhaltenen rezyklierten Kohlenstofffasern sind insbesondere abhängig von der Größe der zur Rezyklierung verwendeten Pyrolysevorrichtung P und von etwaigen vor der Rezyklierung durchgeführten Zerkleinerungsschritten des zu rezyklierenden Gegenstands. Was die Bestimmung der Faserlänge und des Faserdurchmessers im Allgemeinen anbelangt, so kann diese anhand von dem Fachmann an sich wohlbekannten Verfahren vorgenommen werden. Insbesondere können die Faserlänge und der Faserdurchmesser im Allgemeinen mit Bestimmungsverfahren auf Basis von Lichtbeugung, insbesondere Röntgenbeugung und/oder Laserdiffraktometrie, aber auch lichtmikroskopisch, elektronenmikroskopisch oder dergleichen bestimmt werden. Darüber hinaus kann die Bestimmung der Faserlängen und Faserdurchmesser im Milimeterbereich auch mittels Siebanalysen gemäß DIN 66165 erfolgen. Insbesondere beziehen sich die zuvor angeführten Größenangaben auf eine zumindest im Wesentlichen faserförmige Grundstruktur. Weiterhin wird auf die nachfolgenden Ausführungen zur Größenbestimmung verwiesen.

Zudem kann es vorgesehen sein, dass die rezyklierten Kohlenstofffasern eine Zugfestigkeit im Bereich von 1.000 bis 6.000 MPa, insbesondere im Bereich von 1.500 bis 5.000 MPa, vorzugsweise im Bereich von 2.000 bis 4.000 MPa, bevorzugt im Bereich von 2.500 bis 3.500 MPa, aufweisen. Die Bestimmung der Zugfestigkeit kann insbesondere nach EN ISO 527-1 erfolgen.

Weiterhin kann es ihm Rahmen der vorliegenden Erfindung vorgesehen sein, dass die rezyklierten Kohlenstofffasern einen Elastizitätsmodul im Bereich von 20 bis 1.000 GPa, insbesondere im Bereich von 50 bis 800 GPa, vorzugsweise im Bereich von 75 bis 600 GPa, bevorzugt im Bereich von 100 bis 400 GPa, weiter bevorzugt im Bereich von 150 bis 300 GPa, aufweisen. Der Elastizitätsmodul kann insbesondere nach DIN EN 61 bestimmt werden.

Darüber hinaus können die rezyklierten Kohlenstofffasern einen mittleren Faserdurchmesser im Bereich von 0,1 bis 100 μm, insbesondere im Bereich von 1 bis 50 μm, vorzugsweise im Bereich von 2 bis 25 μm, bevorzugt im Bereich von 3 bis 15 μm, besonders bevorzugt im Bereich von 4 bis 10 μm, aufweisen. Die Bestimmung des mittleren Faserdurchmessers kann beispielsweise durch lichtmikroskopische und/oder elektronenmikroskopische Bestimmungsmethoden - wie voranstehend ausgeführt - ermittelt werden.

Gemäß einer erfindungsgemäß bevorzugten Ausführungsform können die rezyklierten Kohlenstofffasern auf ihrer Oberfläche mindestens ein Behandlungsmittel enthalten, insbesondere ausgewählt aus der Gruppe von (i) duroplastischen Kunststoffen, insbesondere Epoxidharzen; (ii) thermoplastischen Kunststoffen, insbesondere Polyolefinharzen; (iii) Dispergiermitteln, insbesondere Fettaminethoxylaten und/oder Dialkylenglykolen; (iv) Entschäumern, insbesondere Polydialkylsiloxanen; sowie deren Mischungen und Kombinationen. Zur Einarbeitung der rezyklierten Kohlenstofffasern, welche nach dem erfindungsgemäßen Verfahren erhältlich sind, können die rezyklierten Kohlenstofffasern, insbesondere auf ihrer Oberfläche, mit mindestens einem Behandlungsmittel modifiziert werden, um die Oberflächeneigenschaften und somit die Einarbeitbarkeit der rezyklierten Kohlenstofffasern in Kunststoffe, Baustoffe sowie zementäre Systeme zu verbessern bzw. die Oberflächeneigenschaften der erfindungsgemäßen rezyklierten Kohlenstofffasern an die entsprechende Matrix anzupassen. Die Einstellung der Oberflächeneigenschaften auf die entsprechende Matrix führt zu einer homogenen Einarbeitung der rezyklierten Kohlenstofffasern und somit zu einer effektiven Verbesserung bzw. Verstärkung der jeweiligen Matrix.

Zudem kann es im Rahmen der vorliegenden Erfindung vorgesehen sein, dass die rezyklierten Kohlenstofffasern in zerkleinerter Form, insbesondere in gehackter und/oder doppelt gehackter und/oder gemahlener Form, vorliegen. Wie bereits zuvor ausgeführt, kann das Hacken der rezyklierten Kohlenstofffasern in einer hierfür üblichen, dem Fachmann an sich bekannten Schneidevorrichtung erfolgen, wobei das Zerkleinern grundsätzlich mittels Nass- oder Trockenverfahren durchgeführt werden kann. Die Faserlängen der rezyklierten Kunststofffasern können durch mehrfache Zerkleinerung bzw. mehrfaches Hacken entsprechend eingestellt werden. Weiterhin kann es vorgesehen sein, dass die gemahlenen rezyklierten Kunststofffasern aus zuvor gehackten rezyklierten Kohlenstofffasern beispielsweise unter Verwendung von Mühlen, wie Hammermühlen, Pralltellermühlen oder Siebkorbmühlen oder dergleichen, erhalten werden.

In diesem Zusammenhang kann es weiterhin vorgesehen sein, dass die zerkleinerten rezyklierten Kohlenstofffasern eine mittlere Faserlänge im Bereich von 0,01 bis 200 mm, insbesondere im Bereich von 0,1 bis 150 mm, vorzugsweise im Bereich von 0,2 bis 100 mm, bevorzugt im Bereich von 0,5 bis 90 mm, besonders bevorzugt im Bereich von 1 bis 80 mm, ganz besonders bevorzugt im Bereich von 2 bis 70 mm, aufweisen. Die Bestimmung der Faserlänge ist insbesondere nach den voranstehend erläuterten Messmethoden möglich. Weiterhin bezieht sich die vorgenannte Faserlänge auf einfach zerkleinerte rezyklierte Kohlenstofffasern, welche eine größere Faserlänge als mehrfach zerkleinerte rezyklierte Kohlenstofffasern aufweisen. Dies ist jedoch für den Fachmann selbstverständlich.

Zudem kann es vorgesehen sein, dass die zerkleinerten rezyklierten Kohlenstofffasern eine mittlere Faserlänge im Bereich von 0,1 bis 70 mm, insbesondere im Bereich von 0,5 bis 60 mm, vorzugsweise im Bereich von 1 bis 50 mm, bevorzugt im Bereich von 2 bis 40 mm, besonders bevorzugt im Bereich von 3 bis 30 mm, ganz besonders bevorzugt im Bereich von 5 bis 20 mm, aufweisen. Die mittlere Faserlänge der rezyklierten Kohlenstofffasern kann, wie vorstehend ausgeführt, ermittelt werden. In diesem Zusammenhang bezieht sich die vorstehend angegebene Faserlänge auf doppelt zerkleinerte rezyklierte Kohlenstofffasern, welche eine geringere Faserlänge als einfach zerkleinerte rezyklierte Kohlenstofffasern aufweisen.

Weiterhin kann es vorgesehen sein, dass die zerkleinerten rezyklierten Kohlenstofffasern eine mittlere Faserlänge im Bereich von 0,1 bis 1.000 µm, insbesondere im Bereich von 1 bis 900 µm, vorzugsweise im Bereich von 5 bis 700 µm, bevorzugt im Bereich von 10 bis 500 µm, besonders bevorzugt im Bereich von 25 bis 400 µm, ganz besonders bevorzugt im Bereich von 50 bis 350 µm, noch mehr bevorzugt im Bereich von 75 bis 250 µm, aufweisen. Die Bestimmung der mittleren Faserlänge der vorstehend genannten rezyklierten Kohlenstofffasern ist mit den oben angeführten Bestimmungsmethoden möglich. In diesem Zusammenhang bezieht sich die vorstehend angegebene mittlere Faserlänge der rezyklierten Kohlenstofffasern auf gemahlene rezyklierte Kohlenstofffasern.

Was die zerkleinerten rezyklierten Kohlenstofffasern weiterhin anbelangt, so können die zerkleinerten rezyklierten Kohlenstofffasern eine Faserdichte im Bereich von 200 bis 5.000 kg/m$^3$, insbesondere im Bereich von 300 bis 4.500 kg/m$^3$, vorzugsweise im Bereich von 500 bis 4.000 kg/m$^3$, bevorzugt im Bereich von 700 bis 3.500 kg/m$^3$, besonders bevorzugt im Bereich von 1.000 bis 3.000 kg/m$^3$, ganz besonders bevorzugt im Bereich von 1.200 bis 2.500 kg/m$^3$, noch mehr bevorzugt im Bereich von 1.500 bis 2.200 kg/m$^3$, aufweisen. Die Bestimmung der Faserdichte der rezyklierten Kohlenstofffasern ist insbesondere mittels DIN 29971 möglich.

Die nach dem erfindungsgemäßen Verfahren erhältlichen rezyklierten Kohlenstofffasern können Verwendung finden als Additiv, insbesondere als Additiv für Kunststoffe, Baustoffe oder zementäre Systeme oder zur Herstellung von kohlenstofffaserhaltigen Kunststoffen oder zur Inkorporierung in Kunststoffen, insbesondere zur Compoundierung, oder zur Herstellung von Kohlenstofffaser enthaltenden Formkörpern (z. B. Bauteilen), Formen und Flächenmaterialien (z. B Vliesstoffen).

Im Rahmen der vorliegenden Erfindung können bevorzugt thermoplastische Kunststoffe, thermoplastische Kunststoffmischungen sowie duroplastische Kunststoffe eingesetzt werden. Insbesondere kann der Kunststoff ausgewählt sein aus der Gruppe von Polycarbonatharzen, Polyamidharzen, gesättigten Polyesterharzen, Polyurethanharzen, Polyacetalharzen, Polysulfonharzen, Polyethersulfonharzen (PES), Polyphenylensulfidharzen (PPS), Polystyrolharzen (PS), Polyolefinharzen, Polyvinylchloridharzen, Polyetheretherketonharzen (PEEK), Polyetherimidharzen (PEI), Polyarylenoxidharzen, Polyamidimidharzen, Polyacrylatharzen, Polyimidharzen sowie deren Mischungen und Kombinationen.

In diesem Zusammenhang kann es insbesondere vorgesehen sein, dass die rezyklierten Kohlenstofffasern zur Compoundierung, insbesondere zur Inkorporierung in Kunststoffe, vorgesehen sind. Insbesondere kann durch die Inkorporierung der rezyklierten Kohlenstofffasern eine Veredelung der Kunststoffe und/oder insbesondere eine Verbesserung der mechanischen Eigenschaften erreicht werden.

Durch die zuvor beschriebene Verwendung der nach dem erfindungsgemäßen Verfahren rezyklierten Kohlenstofffasern lassen sich beispielsweise Kunststoffe, Baustoffe oder zementäre Systeme erhalten, welche rezyklierte Kohlenstofffasern, wie sie zuvor eingehend beschrieben worden sind, umfassen bzw. welche unter Verwendung von nach dem erfindungsgemäßen Verfahren erhältlichen rezyklierten Kohlenstofffasern, wie sie zuvor eingehend beschrieben worden sind, hergestellt sind.

Durch die zuvor beschriebene Verwendung der nach dem erfindungsgemäßen Verfahren rezyklierten Kohlenstofffasern lassen sich beispielsweise Formkörper (z. B. Bauteile), Formen und Flächenmaterialien (z. B. Vliesstoffe), insbesondere in Form von Kompositmaterialien oder Compounds, erhalten, welche rezyklierte Kohlenstofffasern, wie sie zuvor eingehend beschrieben worden sind, umfassen bzw. welche unter Verwendung von nach dem erfindungsgemäßen Verfahren erhältlichen rezyklierten Kohlenstofffasern, wie sie zuvor eingehend beschrieben worden sind, hergestellt sind.

Weitere Vorteile, Eigenschaften, Aspekte und Merkmale der vorliegenden Erfindung ergeben sich aus der folgenden Beschreibung von in der Zeichnung dargestellten, bevorzugten Ausführungsbeispielen. Die oben beschriebenen und/oder in den Ansprüchen und/oder in den nachfolgenden Figurenbeschreibung offenbarten Merkmale können bedarfsweise auch miteinander kombiniert werden, auch wenn dies nicht im Einzelnen ausdrücklich beschrieben ist.

Es zeigt:

Fig. 1      schematisch einen Ablauf des erfindungsgemäßen Verfahrens zur Rückgewinnung (Rezyklierung) von Kohlenstofffasern aus kohlenstofffaserhaltigen Kunststoffen gemäß einer bevorzugten Ausführungsform des erfindungsgemäßen Verfahrens;

Fig. 2A     schematisch eine Darstellung einer Kohlenstoffprimärfaser 1 mit einer glatten Oberfläche;

Fig. 2B     schematisch eine Darstellung einer mit einem nichterfindungsgemäßen Verfahren erhaltenen rezyklierten Kohlenstofffaser 1', welche Pyrolyse- bzw. Verkokungsrückstände 3 sowie Rillen 2 aufweist; und

Fig. 2C     schematisch eine Darstellung einer mit dem erfindungsgemäßen Verfahren erhaltenen rezyklierten Kohlenstofffaser 1", welche Rillen 2" aufweist.

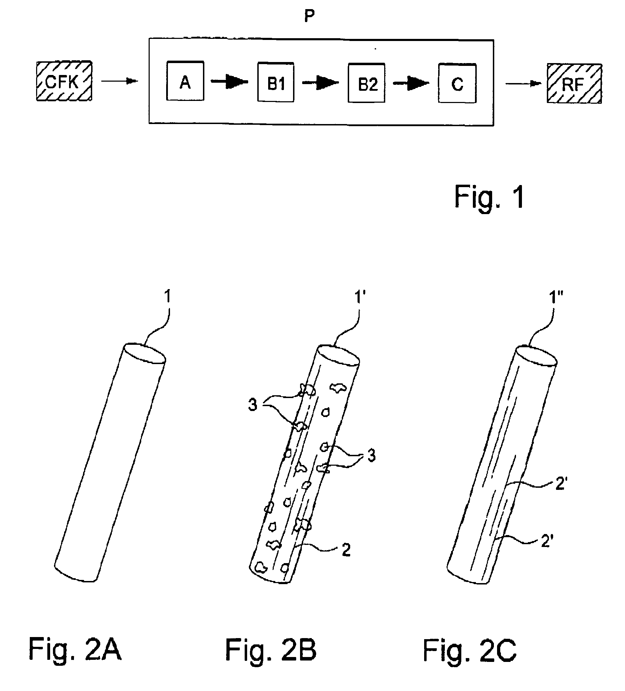

Fig. 1 zeigt schematisch - gemäß einer bevorzugten Ausführungsform der Erfindung - einen Ablauf des erfindungsgemäßen Verfahrens zur Rückgewinnung (Rezyklierung) von Kohlenstofffasern aus kohlenstofffaserhaltigen Kunststoffen. Die Kunststoffmatrix des zu behandelnden kohlenstofffaserhaltigen Kunststoffs CFK wird in einer Pyrolyseeinrichtung P zunächst in einer Aufwärmzone A auf eine definierte Temperatur erwärmt und im nachfolgenden Schritt in einer ersten Pyrolysezone B1 bei einer definierten Temperatur und einem definierten Sauerstoffgehalt einer selektiven Pyrolyse unterzogen. In einer auf die erste Pyrolysezone B1 folgenden zweiten Pyrolysezone B2 erfolgen die abschließende Pyrolyse der noch verbleibenden Kunststoffmatrix des kohlenstofffaserhaltigen Kunststoffs CFK bis zur zumindest im Wesentlichen vollständigen Entfernung der Kunststoffmatrix sowie die vollständige Entfernung der Pyrolyserückstände auf der Oberfläche der rezyklierten Kohlenstofffaser bei einer definierten Temperatur und einem definierten Sauerstoffgehalt. Anschließend erfolgt in einer Abkühlzone C eine Abkühlung, so dass schließlich die auf diese Weise erhaltenen rezyklierten Kohlenstofffasern RF resultieren.

Fig. 2A zeigt schematisch eine Kohlenstoffprimärfaser 1, welche eine glatte Oberflächenstruktur aufweist.

Fig. 2B zeigt schematisch eine rezyklierte Kohlenstofffaser 1', welche durch ein nichterfindungsgemäßes Verfahren erhalten wird. Die Oberfläche der rezyklierten Kohlenstofffaser 1' weist Rillen 2 auf, welche durch die Oxidation der Oberfläche der Kohlenstofffaser während der Rezyklierung entstehen. Weiterhin befindet sich eine signifikante Menge an Pyrolyse- bzw. Verkokungsrückständen 3 auf der Oberfläche der rezyklierten Kohlenstofffaser 1'. Aufgrund der signifikanten Menge an Pyrolyse- bzw. Verkokungsrückstand 3 ist die Einarbeitbarkeit der rezyklierten Kohlenstofffaser 1', welche durch ein nichterfindungsgemäßes Verfahren erhalten wird, in Kunststoffe nicht bzw. nicht signifikant besser als die Einarbeitbarkeit der Kohlenstoffprimärfaser 1.

Fig. 2C zeigt schematisch eine rezyklierte Kohlenstofffaser 1", welche durch das erfindungsgemäße Verfahren erhalten wird. Die Oberfläche der rezyklierten Kohlenstofffaser weist in Folge der Oxidation der rezyklierten Kohlenstofffaser während der Rezyklierung Rillen 2' auf. Jedoch befinden sich aufgrund der erfindungsgemäßen Verfahrensführung keine Pyrolyse- bzw. Verkokungsrückstände auf der Oberfläche der erfindungsgemäßen rezyklierten Kohlenstofffaser 1". Somit weist die erfindungsgemäße rezyklierte Kohlenstofffaser 1" sowohl gegenüber der Kohlenstoffprimärfaser 1 als auch gegenüber der nichterfindungsgemäß rezyklierten Kohlenstofffaser 1' eine signifikant verbesserte Einarbeitbarkeit in Kunststoffe auf.

Die schematischen Darstellungen gemäß Fig. 2A, 2B und 2C entsprechen mikroskopischen Analysen der Anmelderin an den entsprechenden Produkten.

Wie zuvor geschildert, ist die vorliegende Erfindung mit einer Vielzahl von Vorteilen und Besonderheiten verbunden, von denen - in nicht beschränkender Weise - nachfolgend einige Aspekte herausgestellt werden sollen:

Ein Vorteil der vorliegenden Erfindung ist insbesondere darin zu sehen, dass durch die Steuerung des Sauerstoffgehalts und/oder der Temperatur während der Pyrolyse die Kunststoffmatrix rückstandslos entfernt wird und zudem die aus dem erfindungsgemäßen Verfahren resultierenden rezyklierten Kohlenstofffasern keine Pyrolyse- bzw. Verkokungsrückstände aufweisen, welche die Qualität der rezyklierten Kohlenstofffasern vermindern und eine erneute Einarbeitung in Kunststoffe erschweren können.

Weiterhin erfolgt durch die erfindungsgemäße Verfahrensführung eine teilweise Oxidation der Oberfläche der rezyklierten Kohlenstofffasern, d. h. es liegen eine rauhere Oberfläche sowie ein höherer Anteil an sauerstoffhaltigen Gruppen, wie Hydroxy-, Aldehyd-, Carboxylgruppen etc., an der Oberfläche der erfindungsgemäß erhaltenen rezyklierten Kohlenstofffasern vor. Die zumindest teilweise oxidierte Oberfläche der erfindungsgemäßen rezyklierten Kohlenstofffasern führt infolge der Wechselwirkung zwischen den sauerstoffhaltigen Gruppen an der Oberfläche der rezyklierten Kohlenstofffasern und der Kunststoffmatrix sowie infolge der Vergrößerung der Oberfläche der rezyklierten Kohlenstofffasern durch die Aufrauhung zu einer verbesserten Einarbeitung in Kunststoffe im Vergleich zu Kohlenstoffprimärfasern und Vergleich zu herkömmlich rezyklierten Kohlenstofffasern.

Darüber hinaus wird durch die erfindungsgemäße Verfahrensführung, insbesondere durch die Steuerung der Temperatur und des Sauerstoffgehalts, während der gesamten Pyrolyse eine übermäßige Oxidation der rezyklierten Kohlenstofffasern vermieden, so dass die erfindungsgemäßen rezyklierten Kohlenstofffasern eine vergleichbare mechanische Stabilität aufweisen wie Kohlenstoffprimärfasern.

Zudem wird aufgrund der stark exothermen Reaktion des Sauerstoff mit den gasförmigen Zersetzungsprodukten der Kunststoffmatrix zur Durchführung des erfindungsgemäßen Verfahrens wesentlich weniger Heizenergie benötigt, so dass das erfindungsgemäße Verfahren äußerst ökonomisch ist. Weiterhin können aufgrund der stark exothermen Reaktion auch die für die Pyrolyse erforderlichen jeweiligen Temperaturen sehr schnell erreicht werden, so dass kurze Verweilzeiten der zu rezyklierenden Gegenstände gemäß dem erfindungsgemäßen Verfahren resultieren. Folglich können mit dem erfindungsgemäßen Verfahren in kurzer Zeit große Mengen an kohlenstofffaserhaltigen Kunststoffen rezykliert werden.

Vor der Durchführung des erfindungsgemäßen Verfahrens ist auch keine mechanische und/oder chemische Vorbehandlung der zu rezyklierenden kohlenstofffaserhaltigen Kunststoffe erforderlich, so dass auch rezyklierte Kohlenstofffasern mit großer Faserlänge erhalten werden können, aus welchen nach Zugabe eines Harzes beispielsweise sogenannte Prepregs hergestellt werden können. Jedoch können die rezyklierten Kohlenstofffasern mit großer Faserlänge auch auf definierte Faserlängen zerkleinert werden, wie sie beispielsweise bei der Compoundierung eingesetzt werden.

Auch können laminare Bahnen aus kohlenstofffaserhaltigen Kunststoffen und anderen Verstärkungsmaterialien, wie Glasfasern, ohne aufwendige Abtrennung in dem erfindungsgemäßen Verfahren rezykliert werden, da das erfindungsgemäße Verfahren in einzelnen Bahnlagen aus rezyklierten Kohlenstofffasern resultiert, aus welchen die Entfernung von anderen Verstärkungsmaterialien leicht möglich ist.

Zudem ermöglicht das erfindungsgemäße Verfahren einen kontinuierlichen Betrieb und eine Durchführung auch im industriellen Maßstab.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung aber nicht beschränken sollen.

**Ausführungsbeispiele:**

Die besonderen Vorteile der Erfindung sind im Folgenden am Beispiel der Rückgewinnung (Rezyklierung) von Kohlenstofffasern aus kohlenstofffaserhaltigen Materialien beschrieben.

A) Verfahren zur Rezyklierung von kohlenstofffaserhaltigen Kunststoffen

Als kohlenstofffaserhaltige Kunststoffe werden kohlenstofffaserverstärkte Kunststoffabfälle (CFK-Abfälle), wie sie beispielsweise im Flugzeugbau (z. B. Flugzeugtragflächen) oder bei Windkrafträdern (z. B. Windflügeln) anfallen, eingesetzt. Falls die CFK-Abfälle größere Dimensionen aufweisen als die Öffnung der Pyrolysevorrichtung, so erfolgt vor der Rezyklierung eine Zerkleinerung der CFK-Abfälle mit dem Fachmann an sich bekannten Schneidevorrichtungen.

Das Verfahren zur Rezyklierung von Kohlenstofffasern aus den zuvor beschriebenen kohlenstofffaserhaltigen Abfällen erfolgt in einer Pyrolysevorrichtung gemäß Fig. 1, welche eine Aufwärmzone A, eine erste Pyrolysezone B1, eine zweite Pyrolysezone B2 sowie eine Abkühlzone C aufweist. Die bei der Pyrolyse entstehenden Abgase bzw. gasförmigen Zersetzungsprodukte der Kunststoffmatrix des Kunststoffs werden in einer Abgasbehandlungseinrichtung, welche an die erste und zweite Pyrolysezone B1 und B2 angeschlossen ist, zersetzt bzw. verbrannt. Weiterhin weist die Pyrolysevorrichtung sauerstoffsensitive Sensoren in der ersten Pyrolysezone B1 und der zweiten Pyrolysezone B2 auf. Zudem sind in der Aufwärmzone A, in der ersten Pyrolysezone B1, in der zweiten Pyrolysezone B2 sowie in der Abkühlzone C Temperatursensoren zur Bestimmung der Temperatur in der jeweiligen Zone vorgesehen. In der Aufwärmzone A, in der ersten Pyrolysezone B1 sowie in der zweiten Pyrolysezone B2 befinden sich weiterhin mehrere Heizelemente zur Bereitstellung der jeweiligen Temperatur, wobei die Heizelemente in Abhängigkeit der durch die Temperatursensoren ermittelten Temperaturen in der jeweiligen Zone gesteuert werden können. Die Kühlung der rezyklierten Kohlenstofffasern in der Abkühlzone C erfolgt mittels einer Kühlung durch Wasser. In diesem Zusammenhang können dem Fachmann an sich bekannte Verfahren, wie Mantelkühlverfahren, eingesetzt werden. Weiterhin weisen die erste Pyrolysezone B1 sowie die zweite Pyrolysezone B2 Entlüftungseinrichtungen auf, welche in Abhängigkeit des ermittelten Sauerstoffgehalts geöffnet oder geschlossen werden können. Die Entlüftungseinrichtungen sind mit der Abgasbehandlungseinrichtung verbunden, so dass die durch die Entlüftungseinrichtungen abgezogenen gasförmigen Zersetzungsprodukte in der Abgasbehandlungsvorrichtung zersetzt bzw. verbrannt werden können. Die Temperatur in der Aufwärmzone A wird jeweils auf 205 bis 295 °C eingestellt, die Temperatur in der Abkühlzone C beträgt jeweils 80 bis 150 °C.

Die Rezyklierung von kohlenstofffaserhaltigen Kunststoffen in Form von sogenannten Prepregs wird in der zuvor beschriebenen Pyrolysevorrichtung durchgeführt, wobei jeweils die Temperaturen T(B1) und T(B2) in der ersten und zweiten Pyrolysezone B1 und B2, der Sauerstoffgehalt G(B1) und G(B2) in der ersten und zweiten Pyrolysezone B1 und B2 sowie die Verweildauern VD(B1) und VD(B2) in der ersten und zweiten Pyrolysezone B1 und B2 variiert werden.

Die genauen Verfahrensbedingungen der durchgeführten Rezyklierungen finden sich in nachfolgender Tabelle 1.

**Tabelle 1: Verfahrensbedingungen zur Rezyklierung von kohlenstofffaserhaltigen Kunststoffen**

| Nr. | T(B1) | T(B2) | G(B1) | G(B2) | VD(B1) | VD(B2) |
|-----|-------|-------|-------|-------|--------|--------|
| 1 | 430-445 °C | 450-480 °C | 2 Vol.-% | 2 Vol.-% | 28 min | 22 min |
| 2* | 430-445 °C | 515-650 °C | 2 Vol.-% | 10 Vol.-% | 28 min | 22 min |
| 3 | 430-445 °C | 755-765 °C | 8 Vol.-% | 8 Vol.-% | 28 min | 22 min |

(fortgesetzt)

| Nr. | T(B1) | T(B2) | G(B1) | G(B2) | VD(B1) | VD(B2) |
|---|---|---|---|---|---|---|
| 4 | 430-445 °C | 590-610 °C | 10 Vol.-% | 10 Vol.-% | 28 min | 22 min |
| 5 | 430-445 °C | 590-610 °C | 2 Vol.-% | 2 Vol.-% | 28 min | 22 min |
| 6 | 540-560 °C | 540-560 °C | 2 Vol.-% | 2 Vol.-% | 28 min | 22 min |
| * erfindungsgemäß | | | | | | |

Die Oberflächenstruktur, der Anteil der Pyrolyserückstände sowie die sauerstoffhaltigen Gruppen auf der Oberfläche der durch die Rezyklierung bei verschiedenen Verfahrensbedingungen erhaltenen rezyklierten Kohlenstofffasern werden mittels der nachfolgend beschriebenen Messmethoden bestimmt.

B) <u>Messmethoden und Ergebnisse</u>

a) Lichtmikroskopische Untersuchungen der rezyklierten Kohlenstofffasern

Die Oberflächenbeschaffenheit sowie die Anwesenheit von Pyrolyserückständen wird mittels Rasterelektronenmikroskopie *(Scanning Electron Microscopy,* auch SEM genannt) untersucht. Geeignete Rasterelektronenmikroskope sind dem Fachmann wohlbekannt. In diesem Zusammenhang können z. B. Rasterelektronenmikroskope des Typs JEOL 6400 F oder des Typs Hitachi S-3200 verwendet werden. Die Auflösung der rasterelektronenmikroskopischen Daten wird dabei durch die Auflösung des Rasterelektronenmikroskops bestimmt. Die mittels der Rasterelektronenmikroskopie erhaltenen Ergebnisse für die verschiedenen Verfahrensbedingungen sind in der nachfolgenden Tabelle 2 dargestellt.

**Tabelle 2: Ergebnisse der rasterelektronenmikroskopischen Untersuchung**

| Nr. | Ergebnis rasterelektronenmikroskopische Untersuchung |
|---|---|
| 1 | sehr glatte Oberfläche, Kunststoffmatrix des Kunststoffes teilweise nicht vollständig entfernt, Vielzahl von Pyrolyserückständen an der Faseroberfläche |
| 2* | rauhe Oberfläche in Form von Rillen und Vertiefungen, keine sichtbaren Beschädigungen der Faseroberfläche, keine Pyrolyserückstände an der Faseroberfläche, Kunststoffmatrix vollständig entfernt |
| 3 | starke Beschädigungen der Kohlenstofffaser, teilweise starke Vertiefungen oder Löcher, rauhe Oberfläche in Form von Rillen, keine Pyrolyserückstände an der Faseroberfläche |
| 4 | starke Beschädigungen der Kohlenstofffasern, teilweise Löcher in der Oberfläche, rauhe Struktur in Form von Rillen, keine Pyrolyserückstände an der Faseroberfläche |
| 5 | kaum Rillen oder Vertiefungen in der Oberfläche, keine Beschädigung der Kohlenstofffaser, Vielzahl von Pyrolyserückständen an der Faseroberfläche |
| 6 | Beschädigung der Kohlenstofffaser, teilweise tiefe Rillen und Zerstörung der Struktur, Vielzahl von Pyrolyserückständen an der Faseroberfläche |
| *erfindungsgemäß | |

Es wurde überraschend gefunden, dass nur bei Verwendung von definierten Sauerstoffgehalten und Temperaturen in der ersten und der zweiten Pyrolysezone B1 und B2 rezyklierte Kohlenstofffasern erhalten werden, welche keine signifikante Beschädigungen der Faseroberfläche aufweisen, jedoch infolge der Oxidation in der zweiten Pyrolysezone B2 eine rauhere Oberfläche in Form von Rillen besitzen. Weiterhin kann bei Verwendung einer höheren Temperatur T(B2) in der zweiten Pyrolysezone B2 sowie eines höheren Sauerstoffgehalts G(B2) in der zweiten Pyrolysezone B2 der Pyrolyserückstand im Wesentlichen vollständig vermieden werden, so dass weder die Einarbeitbarkeit noch die mechanischen Eigenschaften, insbesondere die Steifigkeit und die Zugdehnung, noch die elektrischen Eigenschaften durch die Rezyklierung signifikant beeinflusst werden (vgl. Probe Nr. 2). Insbesondere weisen die rezyklierten Kohlenstofffasern bei erfindungsgemäßer Verfahrensführung (vgl. Probe Nr. 2) eine nahezu identische Steifigkeit sowie eine lediglich um etwa 5 % bis 10 % geringere Zugdehnung als Kohlenstoffprimärfasern auf. Werden der Sauerstoffgehalt G(B2) und die Temperatur T(B2) in der zweiten Pyrolysezone B2 zu gering gewählt (vgl. Probe Nr. 1) erfolgt eine nicht vollständige Entfernung der Kunststoffmatrix, und es können erhebliche Mengen an Pyrolyserückständen an der Faseroberfläche beobachtet werden. Wird hingegen in der zweiten Pyrolysezone B2 die Temperatur T(B2) zu stark erhöht (vgl. Probe Nr. 3), so erfolgt eine teilweise Zerstörung der rezyklierten Kohlenstofffasern aufgrund der hohen Temperatur in Kombination mit dem hohen Sauerstoffgehalt, so dass sich die mechanischen Eigenschaften der rezyklierten Kohlenstofffasern signifikant verschlechtern. Bei gleichbleibenden Sauerstoffgehalten in der ersten und der zweiten Pyrolysezone B1 und B2 (vgl. Proben Nr. 4 und 5) erfolgt entweder eine Zerstörung der Faser aufgrund des zu hohen Sauerstoffgehalts G(B1) in der ersten Pyrolysezone B1 (vgl. Probe Nr. 4) oder eine nicht vollständige Entfernung der Pyrolyserückstände aufgrund des zu geringen Sauerstoffgehalts G(B2) in der zweiten Pyrolysezone B2 (vgl. Probe Nr. 5). Auch führt die gleichbleibende Temperatur in der ersten und der zweiten Pyrolysezone B1 und B2 (vgl. Probe Nr. 6) zu einer signifikanten Menge an Pyrolyserückständen und einer teilweisen Beschädigung der Faser aufgrund der zu hohen Temperaturen T(B1) in der ersten Pyrolysezone B1.

b) Kontaktwinkelmessung mittels Wilhelmy-Methode

Die Kontaktwinkelmessungen an rezyklierten Kohlenstofffasern, welche durch die verschiedene Verfahrensbedingungen erhalten sind, werden mittels eines Tensiometers, z. B. eines Tensiometers K100SF der Firma KRÜSS GmbH, Hamburg. Deutschland, bestimmt. Die Kontaktwinkelmessungen werden als Einzelfasermessungen gegenüber Wasser durchgeführt.

Hierzu werden zunächst die jeweiligen rezyklierten Kohlenstofffasern auf eine Länge von 0,8 bis 1 cm zerkleinert. Die Zerkleinerung der jeweiligen rezyklierten Kohlenstofffasern kann beispielsweise durch Hacken in einer hierfür üblichen, dem Fachmann an sich bekannten Schneidevorrichtung erfolgen, wobei die Zerkleinerung grundsätzlich mittels Nass- oder Trockenverfahren durchgeführt werden kann.

Die zerkleinerten rezyklierten Kohlenstofffasern werden mit Hilfe eines Probenhalters am Kraftaufnehmer (Waagesystem) des Tensiometers fixiert, die Testflüssigkeit - im vorliegenden Fall Wasser - wird in ein Messgefäß (Glas, Durchmesser 70 mm, Volumen ca. 70 ml) gefüllt und in eine Temperiereinheit des Tensiometers unter dem Kraftaufnehmer positioniert.

Zunächst erfolgt die Bestimmung der benetzten Länge der jeweiligen Einzelfasern gegenüber n-Heptan. Die zur Messung benötigten Parameter der n-Heptan-Testflüssigkeit und des Wassers sind in nachfolgender Tabelle wiedergegeben.

**Tabelle 3: Parameter der Testflüssigkeiten**

| Testflüssigkeit | σ [mN/m] | ρ [g/cm$^3$] |
|---|---|---|
| n-Heptan | 20,4 | 0,684 |
| Wasser | 72,80 | 0,998 |

Die Messung der Kontaktwinkel sowie der benetzten Länge wird bei einer Temperatur von (23 °C $\pm$ 0,5) °C durchgeführt, wobei die Bestimmung des dynamischen Kontaktwinkels als Fortschreitewinkel erfolgt. Pro rezyklierter Kohlenstofffaser wird jeweils eine Doppelbestimmung durchgeführt.

Die Detektionsgeschwindigkeit beträgt 6 mm/min, die Messgeschwindigkeit beträgt 1 mm/min, die Empfindlichkeit beträgt 0,0004 mg, und die Eintauchtiefe der Faser (Position) beträgt 5 mm.

Auf den am Kraftaufnehmer registrierten Kraftänderungen an der rezyklierten Kohlenstofffaser im Kontakt mit Wasser und in Abhängigkeit der Position, der Oberflächenspannung des Wassers und der vorher bestimmten benetzen Länge der rezyklierten Kohlenstofffaser wird mittels einer Software (z. B. Labdesk Software der Firma KRÜSS GmbH, Hamburg, Deutschland) der Kontaktwinkel automatisiert bestimmt bzw. berechnet, wobei im vorliegenden Fall die Bestimmung als Online-Kontaktwinkel erfolgt.

Die benetzte Länge der rezyklierten Kohlenstofffasern sowie die Kontaktwinkel sind in nachfolgender Tabelle 4 wiedergegeben.

**Tabelle 4: Benetzte Länge sowie Kontaktwinkel der rezyklierten Kohlenstofffasern**

| Nr. | Benetzte Länge [mm] | Kontaktwinkel [°] |
|---|---|---|
| 1 | 0,025 $\pm$ 0,000 | 84,40 $\pm$ 0,04 |
| 2* | 0,025 $\pm$ 0,001 | 69,80 $\pm$ 0,30 |

(fortgesetzt)

| Nr. | Benetzte Länge [mm] | Kontaktwinkel [°] |
|---|---|---|
| 5 | 0,023 ± 0,001 | 77,75 ± 0,92 |
| *erfindungsgemäß | | |

Die Kontaktwinkel für die Proben Nr. 3, 4 sowie 6 konnten aufgrund der starken Zerstörung der rezyklierten Kohlenstofffasern nicht bestimmt werden. Weiterhin wurde überraschend herausgefunden, dass bei Verwendung von höheren Temperaturen T(B2) und höheren Sauerstoffgehalten G(B2) in der zweiten Pyrolysezone B2 eine Oxidation der Oberfläche stattfindet, so dass eine hydrophile Oberfläche resultiert (Probe Nr. 2). Dies wird durch den geringeren Kontaktwinkel gegenüber der Probe Nr. 1 verdeutlicht, welche aufgrund der geringen Temperaturen T(B2) in der zweiten Pyrolysezone B2 keine hydrophile Oberfläche aufweist. Auch Probe Nr. 5 weist einen höheren Kontaktwinkel als die erfindungsgemäße Probe Nr. 2 auf, da aufgrund des geringen Sauerstoffgehalts G(B2) in der zweiten Pyrolysezone B2 keine Oxidation der rezyklierten Kohlenstofffaser stattgefunden hat und somit auch keine hydrophile Oberfläche vorliegt. Insgesamt wurde überraschend gefunden, dass durch die erfindungsgemäße Verfahrensführung eine Oxidation der Oberfläche stattfindet, jedoch ohne diese signifikant zu beschädigen, so dass die mechanischen Eigenschaften der erfindungsgemäßen rezyklierten Kohlenstofffasern erhalten bleiben. Durch die hydrophilere Oberfläche erfolgt eine bessere Einarbeitbarkeit in Kunststoffe, Baustoffe oder zementäre Systeme im Vergleich zu Kunststoffprimärfasern, welche einen Kontaktwinkel oberhalb von 75° aufweisen (d. h. schlechter benetzbar sind).

c) Gravimetrische und thermogravimetrische Analyse (TGA)

Die gravimetrische Bestimmung des Pyrolyserückstands kann durch

Suspendieren einer genau ermittelten Menge der jeweiligen rezyklierten Kohlenstofffasern in einem Lösungsmittel, wie Dichlormethan, nachfolgender Behandlung der Suspension im Ultraschallbad, Filtration durch ein grobes Sieb, welches nur die Kohlenstofffasern zurückhält, und Rückwaage der getrockneten rezyklierten Kohlenstofffasern erfolgen. Der Anteil der Pyrolyserückstände ergibt sich aus der Differenz zwischen dem Gewicht der rezyklierten Kohlenstofffasern vor und nach der Behandlung mit dem Lösungsmittel, wie Dichlormethan.

Vorliegend wurde der Anteil der Pyrolyserückstände mittels thermogravimetrischer Analyse (TGA) bestimmt. Die thermogravimetrische Analyse (TGA) kann mit dem Fachmann an sich bekannten Messapparaten durchgeführt werden. Vorliegend werden die durch die verschiedenen Verfahrensbedingungen der Rezyklierung erhaltenen rezyklierten Kohlenstofffasern zunächst fein zerkleinert, wobei die Zerkleinerung mit dem Fachmann an sich bekannten Zerkleinerungsmethoden, insbesondere unter Verwendung von Schneidevorrichtungen oder Mühlen, wie Hammermühlen, Pralltellermühlen, Siebkorbmühlen, durchgeführt werden kann. Im Anschluss an die Zerkleinerung der jeweiligen Probe wird 1 mg der zerkleinerten rezyklierten Kohlenstofffasern, welche unter den verschiedenen Verfahrensbedingungen erhalten sind, in die Messvorrichtung überführt und die thermogravimetrische Analyse mit den folgenden Parametern durchgeführt: Die Luftstromrate beträgt 20 cm$^3$/s, die Aufheizrate der Temperatur beträgt 10 °C/min, und die Aufzeichnungsrate beträgt 1/s. Die bis etwa 550 °C verdampfenden Rückstände, bei welchen es sich um die Pyrolyserückstände handelt, werden durch Wiegen der Probe vor und nach der thermogravimetrischen Analyse bestimmt. Die Bestimmung kann beispielsweise mittels einer Mikrowaage erfolgen.

Für die Probe Nr. 2 konnten keine Gewichtsverluste festgestellt werden, so dass die erfindungsgemäße Verfahrensführung nicht in signifikanten Mengen an Pyrolyserückständen resultiert. Insbesondere weisen die gemäß dem erfindungsgemäßen Verfahren hergestellten rezyklierten Kohlenstofffasern Pyrolyserückstände von weniger als 0,1 Gew.-% auf. Die nichterfindungsgemäßen Proben 1 und 3 bis 6 weisen jeweils signifikante Mengen an Pyrolyserückständen von jeweils mehr als 5 Gew.-% auf. Im Falle der Probe Nr. 4 konnten zwar keine signifikanten Mengen an Pyrolyserückständen bestimmt werden, jedoch wurde - bedingt durch die Verfahrensbedingungen - eine starke Beschädigung der rezyklierten Kohlenstofffasern, wie oben bereits ausgeführt, mittels Rasterelektronenmikroskopie ermittelt.

d) Röntgenphotoelektronenspektroskopie (XPS)

Schließlich wurden die Art und Menge der sauerstoffhaltigen Gruppen auf der Oberfläche der durch die unterschiedlichen Verfahrensbedingungen hergestellten rezyklierten Kohlenstofffasern mittels Röntgenphotoelektronenspektroskopie (XPS) bestimmt.

Die jeweiligen rezyklierten Kohlenstofffasern werden bündelweise auf einen Abstandshalter aus Edelstahl mit einem Durchmesser von 1 cm aufgebracht, welcher mit doppelseitigem Klebeband versehen ist. Die Enden des rezyklierten Kohlenstofffaserbündels werden anschließend auf dem Abstandshalter durch die Verwendung eines weiteren Klebebands fixiert. Auf diesem Abstandshalter werden alle sechs Proben im Abstand von etwa 5 mm platziert.

Die Röntgenphotoelektronenspektroskopie kann mit dafür geeigneten Messgeräten, beispielsweise einem Kratos AXIS ULTRA, mit einer monochromatischen Al-K$\alpha$-Röntgenelektronenquelle (1486.6 eV) bei einem Emissionsstrom von 15 mA und einem Anodenpotential von 10 kV durchgeführt werden. Die Spektren werden im Bereich von 0 bis 1100 eV aufgenommen, wobei die Durchlassenergie 80 eV beträgt und die Schrittweite auf 0,5 eV eingestellt wird. Alle Spektren werden mit einem 90°-Abstrahlwinkel aufgenommen. Es werden jeweils drei Positionen in der Mitte der Probe vermessen, wobei die Oberfläche der Probe jeweils 300 $\mu$m x 700 $\mu$m beträgt.

Die Zusammensetzung der Oberfläche wird mittels einer Software, wie beispielsweise CasaXPS, berechnet.

Wie von der Anmelderin überraschend festgestellt, weisen die erfindungsgemäß rezyklierten Kohlenstofffasern der Probe Nr. 2 höhere. Konzentrationen an Keto- und Carboxylat-Gruppen an der Oberfläche auf als die nichterfindungsgemäßen Proben Nr. 1 und 5. Die Proben Nr. 3, 4 und 6 weisen aufgrund der äußerst starken Oxidation sogar einen noch höheren Anteil an Keto- und Carboxylat-Gruppen auf als die erfindungsgemäßen rezyklierten Kohlenstofffasern, jedoch werden die rezyklierten Kohlenstofffasern der Proben Nr. 3, 4 und 6 aufgrund der Verfahrensführung teilweise zerstört.

Der erhöhte Anteil an sauerstoffhaltigen Gruppen, insbesondere Keto- und Carboxylat-Gruppen, führt zu einer hydrophileren Oberfläche der erfindungsgemäßen rezyklierten Kohlenstofffasern. Diese hydrophilere Oberfläche führt zu einer besseren Einarbeitbarkeit aufgrund der besseren Benetzbarkeit der Oberfläche.

C) Weitere durchgeführte Rezyklierungen

Zudem werden unter den zuvor spezifizierten allgemeinen Verfahrensbedingungen in derselben Pyrolysevorrichtung weitere erfindungsgemäße Pyrolyseversuche mit kohlenstofffaserverstärkten Kunststoffabfällen (CFK-Abfällen) in Form von sogenannten Prepregs durchgeführt. Die genauen Verfahrensbedingungen der durchgeführten Rezyklierungen finden sich in nachfolgender Tabelle 5.

**Tabelle 5: Verfahrensbedingungen zur Rezyklierung von kohlenstofffaserhaltiaen Kunststoffen**

| Nr. | T(B1) | T(B2) | G(B1) | G(B2) | VD(B1) | VD(B2) |
|-----|-------|-------|-------|-------|--------|--------|
| 2a* | 380-395 °C | 450-470 °C | 0,8 Vol.-% | 14 Vol.-% | 35 min | 15 min |
| 2b* | 435-450 °C | 520-640 °C | 1,5 Vol.-% | 12 Vol.-% | 29 min | 21 min |
| 2c* | 455-470 °C | 460-515 °C | 1 Vol.-% | 9 Vol.-% | 27 min | 23 min |
| 2d* | 430-445 °C | 590-610 °C | 3 Vol.-% | 8 Vol.-% | 26 min | 24 min |
| * erfindungsgemäß | | | | | | |

Die Oberflächenstruktur, der Anteil der Pyrolyserückstände sowie die sauerstoffhaltigen Gruppen auf der Oberfläche der durch die Rezyklierung bei verschiedenen Verfahrensbedingungen erhaltenen rezyklierten Kohlenstofffasern werden mittels der zuvor beschriebenen Messmethoden bestimmt und zeigen vergleichbare Ergebnisse zu der zuvor beschriebenen erfindungsgemäßen Probe Nr. 2.

Die mikroskopischen Untersuchungen der rezyklierten Kohlenstofffasern gemäß den erfindungsgemäßen Proben Nr. 2a-d zeigen, dass für alle Versuche rezyklierte Kohlenstofffasern resultieren, welche eine rauhe Oberfläche in Form von Rillen und Vertiefungen, aber keine sichtbaren Beschädigungen der Faseroberfläche und keine Pyrolyserückstände an der Faseroberfläche aufweisen.

Die Ergebnisse der Kontaktwinkelmessungen gemäß der Wilhelmy-Methode sind in der nachfolgenden Tabelle 6 wiedergegeben:

**Tabelle 6: Benetzte Länge sowie Kontaktwinkel der rezyklierten Kohlenstofffasern**

| Nr. | Benetzte Länge [mm] | Kontaktwinkel [°] |
|-----|---------------------|-------------------|
| 2a* | 0,028 $\pm$ 0,000 | 65,45 $\pm$ 0,11 |
| 2b* | 0,025 $\pm$ 0,001 | 67,78 $\pm$ 0,25 |
| 2c* | 0,023 $\pm$ 0,001 | 69,65 $\pm$ 0,82 |
| 2d* | 0,024 $\pm$ 0,001 | 70,16 $\pm$ 0,22 |
| *erfindungsgemäß | | |

**Bezugszeichenliste:**

| | |
|---|---|
| P | Pyrolysevorrichtung |
| A | Aufwärmzone |
| B1 | erste Pyrolysezone |
| B2 | zweite Pyrolysezone |
| C | Abkühlzone |
| CFK | kohlenstofffaserhaltiger Kunststoff |
| RF | rezyklierte Kohlenstofffasern |
| 1 | Kohlenstofffprimärfaser |
| 1' | rezyklierte Kohlenstofffaser (nicht erfindungsgemäß) |
| 1" | rezyklierte Kohlenstofffaser (erfindungsgemäß) |
| 2 | Rillen einer rezyklierten Kohlenstofffaser 1' (nicht erfindungsgemäß) |
| 2' | Rillen einer rezyklierten Kohlenstofffaser 1" (erfindungsgemäß) |
| 3 | Pyrolyse- bzw. Verkokungsrückstand |

**Patentansprüche**

1. Verfahren zur Rückgewinnung von Kohlenstofffasern aus kohlenstofffaserhaltigen Kunststoffen, insbesondere aus kohlenstofffaserverstärkten Kunststoffen, vorzugsweise aus kohlenstofffaserhaltigen und/oder kohlenstofffaserverstärkten Verbundwerkstoffen, wobei ein Gegenstand auf Basis eines Kohlenstofffasern enthaltenden Kunststoffs, welcher Kohlenstofffasern in einer Kunststoffmatrix umfasst, einer mehrstufigen Pyrolyse in Gegenwart von Sauerstoff unterzogen wird, wobei bei der Pyrolyse der Kunststoff der Kunststoffmatrix unter Erhalt der Kohlenstofffasern zersetzt wird,
wobei die Pyrolyse in einer Pyrolysevorrichtung P durchgeführt wird, wobei die Pyrolysevorrichtung P mindestens die folgenden Behandlungszonen in der nachfolgend spezifizierten Abfolge umfasst und der Gegenstand in dieser Abfolge die nachfolgenden Behandlungszonen durchläuft:

(A) eine Aufwärmzone A, in welcher der zu behandelnde und/oder zu rezyklierende Gegenstand auf eine definierte Temperatur T(A) erwärmt wird,
(B1) nachfolgend eine erste Pyrolysezone B1, in welcher bei einer definierten Temperatur T(B1) und einem definierten Sauerstoffgehalt G(B1) eine Pyrolyse des Kunststoffs der Kunststoffmatrix des zu behandelnden Gegenstands einsetzt und/oder durchgeführt wird,
(B2) nachfolgend eine zweite Pyrolysezone B2, in welcher bei einer definierten Temperatur T(B2) und einem definierten Sauerstoffgehalt G(B2) eine abschließende Pyrolyse des nach der Pyrolysezone B1 noch verbleibenden Kunststoffs der Kunststoffmatrix des zu behandelnden Gegenstands bis zur zumindest im Wesentlichen vollständigen Entfernung durchgeführt wird,
(C) nachfolgend eine Abkühlzone C zum Abkühlen der aus der zweiten Pyrolysezone B2 erhaltenen rezyklierten Kohlenstofffasern RF;

wobei der Sauerstoffgehalt G(B2) in der zweiten Pyrolysezone B2 gegenüber dem Sauerstoffgehalt G(B1) in der ersten Pyrolysezone B1 erhöht wird und wobei die Temperatur T(B2) in der zweiten Pyrolysezone B2 gegenüber der Temperatur T(B1) in der ersten Pyrolysezone B1 erhöht wird,
wobei der Sauerstoffgehalt G(B1) in der in der ersten Pyrolysezone B1 im Bereich von 0,1 Vol.-% bis 12 Vol.-% eingestellt wird und der Sauerstoffgehalt G(B2) in der zweiten Pyrolysezone B2 im Bereich von 3 Vol.-% bis 20 Vol.-% eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 um 3 Vol.-% bis 15 Vol.-% erhöht wird, und wobei die Temperatur T(B2) in der zweiten Pyrolysezone B2 gegenüber der Temperatur T(B1) in der ersten Pyrolysezone B1 um 25 °C bis 300 °C erhöht wird.

2. Verfahren nach Anspruch 1,
wobei der Sauerstoffgehalt G(B2) in der zweiten Pyrolysezone B2 gegenüber dem Sauerstoffgehalt G(B1) in der ersten Pyrolysezone B1 um 5 Vol.-% bis 15 Vol.-%, vorzugsweise um 7,5 Vol.-% bis 15 Vol.-%, besonders bevorzugt um 10 Vol.-% bis 15 Vol.-%, erhöht wird; und/oder
wobei der Sauerstoffgehalt G(B1) in der ersten Pyrolysezone B1 im Bereich von 0,5 Vol.-% bis 10 Vol.-%, vorzugsweise im Bereich von 0,75 Vol.-% bis 6 Vol.-%, besonders bevorzugt im Bereich von 1 Vol.-% bis 4 Vol.-%, eingestellt wird und der Sauerstoffgehalt G(B2) in der zweiten Pyrolysezone B2 im Bereich von 5 Vol.-% bis 17 Vol.-%, besonders bevorzugt im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht wird und/oder dass der Sauerstoffgehalt G(B2) in der zweiten Pyrolysezone B2 gegenüber dem Sauerstoffgehalt G(B1) in der ersten Pyrolysezone B1 um 5 Vol.-% bis 15 Vol.-%, vorzugsweise um 7,5 Vol.-% bis 15 Vol.-%, besonders bevorzugt um 10 Vol.-% bis 15 Vol.-%, erhöht wird; und/oder wobei der Sauerstoffgehalt in der ersten und zweiten Pyrolysezone B1 und B2 gesteuert und/oder kontrolliert wird derart, dass der Sauerstoffgehalt G(B1) in der ersten Pyrolysezone B1 unterstöchiometrisch in Bezug auf die zu zersetzende Kunststoffmatrix eingestellt wird und der Sauerstoffgehalt G(B2) in der zweiten Pyrolysezone B2 überstöchiometrisch in Bezug auf die zu zersetzende Kunststoffmatrix eingestellt wird.

3.  Verfahren nach einem der vorangehenden Ansprüche,
    wobei der Sauerstoffgehalt während der Pyrolyse, vorzugsweise während des gesamten Verfahrens, insbesondere der Sauerstoffgehalt G(B1) in der ersten Pyrolysezone B1 und der Sauerstoffgehalt G(B2) in der zweiten Pyrolysezone B2, gesteuert und/oder kontrolliert wird, vorzugsweise durch Abziehen von aus der Zersetzung der Kunststoffmatrix stammenden Zersetzungsprodukten, insbesondere gasförmigen Zersetzungsprodukten, und/oder durch Zufuhr von Sauerstoff, bevorzugt in Form von Luft; und/oder
    wobei der Sauerstoffgehalt während der Pyrolyse, vorzugsweise während des gesamten Verfahrens, insbesondere der Sauerstoffgehalt G(B1) in der ersten Pyrolysezone B1 und der Sauerstoffgehalt G(B2) in der zweiten Pyrolysezone B2, über Sauerstofferfassungseinrichtungen, insbesondere sauerstoffsensitive Sensoren und/oder Drucksonden, erfasst wird, insbesondere wobei mittels der Sauerstofferfassungseinrichtungen der Sauerstoffgehalt durch Abziehen von aus der Zersetzung der Kunststoffmatrix stammenden Zersetzungsprodukten, bevorzugt mittels Entlüftungseinrichtungen, und/oder durch Zufuhr von Sauerstoff gesteuert und/oder kontrolliert wird; und/oder
    wobei der Sauerstoffgehalt während der Pyrolyse, vorzugsweise während des gesamten Verfahrens, insbesondere der Sauerstoffgehalt G(B1) in der ersten Pyrolysezone B1 und der Sauerstoffgehalt G(B2) in der zweiten Pyrolysezone B2, gesteuert und/oder kontrolliert wird derart, dass in der ersten Pyrolysezone B1 zumindest im Wesentlichen selektiv nur die Kunststoffmatrix pyrolysiert und in der zweiten Pyrolysezone B2 zumindest im Wesentlichen selektiv nur die nach der ersten Pyrolysezone B1 noch verbleibende Kunststoffmatrix und Pyrolyserückstände entfernt und die Oberfläche der auf diese Weise rezyklierten Kohlenstofffasern RF zumindest teilweise oxidiert wird.

4.  Verfahren nach einem der vorangehenden Ansprüche,
    wobei die Temperatur T(B2) in der zweiten Pyrolysezone B2 gegenüber der Temperatur T(B1) in der ersten Pyrolysezone B1 um 50 °C bis 250 °C, vorzugsweise um 75 °C bis 200 °C, besonders bevorzugt um 100 °C bis 175 °C, erhöht wird.

5.  Verfahren nach einem der vorangehenden Ansprüche,
    wobei die Temperatur T(B1) in der ersten Pyrolysezone B1 im Bereich von 375 °C bis 475 °C, insbesondere im Bereich von 390 °C bis 465 °C, vorzugsweise im Bereich von 415 °C bis 455 °C, besonders bevorzugt im Bereich von 430 °C bis 445 °C, eingestellt wird und die Temperatur T(B2) in der zweiten Pyrolysezone B2 im Bereich von 450 °C bis 750 °C, insbesondere im Bereich von 480 °C bis 690 °C, vorzugsweise im Bereich von 510 °C bis 675 °C, besonders bevorzugt im Bereich von 515°C bis 650 °C, eingestellt wird, jedoch mit der Maßgabe, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht wird und/oder dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht wird.

6.  Verfahren nach einem der vorangehenden Ansprüche,
    wobei die Temperatur während der Pyrolyse, vorzugsweise während des gesamten Verfahrens, insbesondere die Temperatur T(B1) in der ersten Pyrolysezone B1 und die Temperatur T(B2) in der zweiten Pyrolysezone B2, gesteuert und/oder kontrolliert wird, vorzugsweise über Temperaturerfassungseinrichtungen, insbesondere temperatursensitive Sensoren; und/oder
    wobei die Temperatur während der Pyrolyse, vorzugsweise während des gesamten Verfahrens, insbesondere die Temperatur T(B1) in der ersten Pyrolysezone B1 und die Temperatur T(B2) in der zweiten Pyrolysezone B2, gesteuert und/oder kontrolliert wird derart, dass in der ersten Pyrolysezone B1 zumindest im Wesentlichen selektiv nur die Kunststoffmatrix pyrolysiert und in der zweiten Pyrolysezone B2 zumindest im Wesentlichen selektiv nur die nach der ersten Pyrolysezone B1 noch verbleibende Kunststoffmatrix und Pyrolyserückstände entfernt und die Oberfläche der auf diese Weise rezyklierten Kohlenstofffasern RF zumindest teilweise oxidiert wird.

7. Verfahren nach einem der vorangehenden Ansprüche,
wobei der Sauerstoffgehalt G(B2) in der zweiten Pyrolysezone B2 gegenüber dem Sauerstoffgehalt G(B1) in der ersten Pyrolysezone B1 erhöht wird und wobei die Temperatur T(B2) in der zweiten Pyrolysezone B2 gegenüber der Temperatur T(B1) in der ersten Pyrolysezone B1 erhöht wird,
wobei der Sauerstoffgehalt G(B1) in der ersten Pyrolysezone B1 im Bereich von 0,1 Vol.-% bis 12 Vol.-%, insbesondere im Bereich von 0,5 Vol.-% bis 10 Vol.-%, vorzugsweise im Bereich von 0,75 Vol.-% bis 6 Vol.-%, besonders bevorzugt im Bereich von 1 Vol.-% bis 4 Vol.-%, eingestellt wird und der Sauerstoffgehalt G(B2) in der zweiten Pyrolysezone B2 im Bereich von 2 Vol.-% bis 30 Vol.-%, insbesondere im Bereich von 3 Vol.-% bis 20 Vol.-%, vorzugsweise im Bereich von 5 Vol.-% bis 17 Vol.-%, besonders bevorzugt im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-%, insbesondere mindestens um 5 Vol.-%, vorzugsweise mindestens um 7,5 Vol.-%, besonders bevorzugt mindestens um 10 Vol.-%, erhöht wird und/oder dass der Sauerstoffgehalt G(B2) in der zweiten Pyrolysezone B2 gegenüber dem Sauerstoffgehalt G(B1) in der ersten Pyrolysezone B1 um 3 Vol.-% bis 15 Vol.-%, insbesondere um 5 Vol.-% bis 15 Vol.-%, vorzugsweise um 7,5 Vol.-% bis 15 Vol.-%, besonders bevorzugt um 10 Vol.-% bis 15 Vol.-%, erhöht wird, und
wobei die Temperatur T(B1) in der ersten Pyrolysezone B1 im Bereich von 375 °C bis 475 °C, insbesondere im Bereich von 390 °C bis 465 °C, vorzugsweise im Bereich von 415 °C bis 455 °C, besonders bevorzugt im Bereich von 430 °C bis 445 °C, eingestellt wird und die Temperatur T(B2) in der zweiten Pyrolysezone B2 im Bereich von 450 °C bis 750 °C, insbesondere im Bereich von 480 °C bis 690 °C, vorzugsweise im Bereich von 510 °C bis 675 °C, besonders bevorzugt im Bereich von 515 °C bis 650 °C, eingestellt wird, jedoch mit der Maßgabe, dass die Temperatur T(B2) in der zweiten Pyrolysezone B2 gegenüber der Temperatur T(B1) in der ersten Pyrolysezone B1 mindestens um 25 °C, insbesondere mindestens um 50 °C, vorzugsweise mindestens um 75 °C, besonders bevorzugt mindestens um 100 °C, noch mehr bevorzugt mindestens um 125 °C, ganz besonders bevorzugt mindestens um 150 °C, erhöht wird und/oder dass die Temperatur T(B2) in der zweiten Pyrolysezone B2 gegenüber der Temperatur T(B1) in der ersten Pyrolysezone B1 um 25 °C bis 300 °C, insbesondere um 50 °C bis 250 °C, vorzugsweise um 75 °C bis 200 °C, besonders bevorzugt um 100 °C bis 175 °C, erhöht wird.

8. Verfahren nach einem der vorangehenden Ansprüche,
wobei der Sauerstoffgehalt G(B2) in der zweiten Pyrolysezone B2 gegenüber dem Sauerstoffgehalt G(B1) in der ersten Pyrolysezone B1 erhöht wird und wobei die Temperatur T(B2) in der zweiten Pyrolysezone B2 gegenüber der Temperatur T(B1) in der ersten Pyrolysezone B1 erhöht wird,
wobei der Sauerstoffgehalt G(B1) in der ersten Pyrolysezone B1 im Bereich von 0,75 Vol.-% bis 6 Vol.-% eingestellt wird und der Sauerstoffgehalt G(B2) in der zweiten Pyrolysezone B2 im Bereich von 6 Vol.-% bis 14 Vol.-%, eingestellt wird, jedoch mit der Maßgabe, dass der Sauerstoffgehalt G(B2) in der zweiten Pyrolysezone B2 gegenüber dem Sauerstoffgehalt G(B1) in der ersten Pyrolysezone B1 mindestens um 3 Vol.-% bis 13 Vol.-% erhöht wird, und
wobei die Temperatur T(B1) in der ersten Pyrolysezone B1 im Bereich von 375 °C bis 475 °C eingestellt wird und die Temperatur T(B2) in der zweiten Pyrolysezone B2 im Bereich von 450 °C bis 750 °C eingestellt wird, jedoch mit der Maßgabe, dass die Temperatur T(B2) in der zweiten Pyrolysezone B2 gegenüber der Temperatur T(B1) in der ersten Pyrolysezone B1 um 50 °C bis 250 °C erhöht wird.

9. Verfahren nach einem der vorangehenden Ansprüche,
wobei die Verweildauer VD(B1) des zu rezyklierenden Gegenstands in der ersten Pyrolysezone B1 im Bereich von 0,1 bis 60 Minuten, insbesondere im Bereich 0,5 bis 30 Minuten, vorzugsweise im Bereich von 0,75 bis 15 Minuten, besonders bevorzugt im Bereich von 1 bis 10 Minuten, ganz besonders bevorzugt im Bereich von 1 bis 8 Minuten, liegt; und/oder
wobei die Verweildauer VD(B2) des zu rezyklierenden Gegenstands in der zweiten Pyrolysezone B2 im Bereich von 0,01 bis 30 Minuten, insbesondere im Bereich von 0,1 bis 12 Minuten, vorzugsweise im Bereich von 0,5 bis 7,5 Minuten, besonders bevorzugt im Bereich von 1 bis 6 Minuten, ganz besonders bevorzugt im Bereich von 2 bis 5 Minuten, liegt; und/oder
wobei das Verhältnis Q der Verweildauer VD(B1) des zu rezyklierenden Gegenstands in der ersten Pyrolysezone B1 zu der Verweildauer VD(B2) des zu rezyklierenden Gegenstands in der zweiten Pyrolysezone B2 mindestens 1,05, insbesondere mindestens 1,1, vorzugsweise mindestens 1,2, bevorzugt mindestens 1,3, besonders bevorzugt mindestens 1,5, und/oder höchstens 4, insbesondere höchstens 3,5, vorzugsweise höchstens 3, bevorzugt höchstens 2,75, besonders bevorzugt höchstens 2,5, beträgt; und/oder

wobei das Verhältnis Q der Verweildauer VD(B1) des zu rezyklierenden Gegenstands in der ersten Pyrolysezone B1 zu der Verweildauer VD(B2) des zu rezyklierenden Gegenstands in der zweiten Pyrolysezone B2 der folgenden Gleichung genügt:

$$1{,}05 \leq Q \leq 4, \text{ insbesondere } 1{,}1 \leq Q \leq 3{,}5, \text{ vorzugsweise } 1{,}2 \leq Q \leq 3,$$
$$\text{bevorzugt } 1{,}3 \leq Q \leq 2{,}75, \text{ besonders bevorzugt } 1{,}5 \leq Q \leq 2{,}5$$

## Claims

1. Method of recovering carbon fibers from carbon fiber-containing plastics, in particular of carbon fiber reinforced plastic, preferably of carbon fiber-containing and/or carbon fiber-reinforced composite materials, wherein an object based on a plastic containing carbon fibers comprises carbon fiber in a plastic matrix and is subjected to multistep pyrolysis in the presence of oxygen, wherein the plastic of the plastic matrix is decomposed during the pyrolysis in order to obtain the carbon fibers:

   wherein the pyrolysis is carried out in a pyrolysis apparatus P, wherein the pyrolysis apparatus P comprises at least the following treatment zones in the sequence specified below and wherein the object passes through the subsequent treatment zones in the following sequence:

   (A) a heating zone A, in which the object to be treated and/or recycled is heated to a defined temperature T(A),
   (B1) then a first pyrolysis zone B1, in which a pyrolysis of the plastic of the plastic matrix of the object to be treated is carried out at a given temperature T(B1) and a defined oxygen content G(B1), and/or,
   (B2) then a second pyrolysis zone B2, in which a final pyrolysis of the plastic of the plastic matrix of the object to be treated remaining after the pyrolysis B1 is carried out at a given temperature T(B2) and a defined oxygen content G(B2) up to at least substantially complete removal,
   (C) then a cooling zone C for the cooling of the recycled RF carbon fiber received from the second pyrolysis zone B2;

   wherein the oxygen content G(B2) in the second pyrolysis zone B2 is increased compared to the oxygen content G(B1) in the first pyrolysis zone B1 <u>and</u> wherein the temperature T(B2) in the second pyrolysis zone B2 is increased compared with the temperature T(B1) in the first pyrolysis zone B1,
   wherein the oxygen content G(B1) in the first pyrolysis zone B1 is adjusted in the range of 0.1 vol.-% to 12 vol.-%, while the oxygen content G(B2) in the second pyrolysis zone B2 is adjusted in the range of 3 vol.-% to 20 vol.-%, but with the proviso that the oxygen content of G(B2) in the second pyrolysis zone B2 is increased compared to the oxygen content G(B1) in the first pyrolysis zone B1 by 3 vol.-% to 15 vol.-%, and
   wherein the temperature T(B2) in the second pyrolysis zone B2 is increased compared to the temperature T(B1) in the first pyrolysis zone B1 by 25 °C to 300 °C.

2. Method according to claim 1,
   wherein the oxygen content G(B2) in the second pyrolysis zone B2 is increased compared to the oxygen content of G(B1) in the first pyrolysis zone B1 by 5 vol.-% to 15 vol.-%, preferably 7.5 vol.-% to 15 vol.-%, more preferably 10 vol.-% to 15 vol.-%; and/or
   wherein the oxygen content G(B1) in the first pyrolysis zone B1 is adjusted in the range of 0.5 vol.-% to 10 vol.-%, preferably in the range of 0.75 vol.-% to 6 vol.-%, particularly preferably in the range of 1 vol.-% to 4 vol.-%, while the oxygen content G(B2) in the second pyrolysis zone B2 is adjusted in the range of 5 vol.-% to 17 vol.-%, particularly preferably in the range of 6 vol.-% to 14 vol.-%, but with the proviso that the oxygen content G(B2) in the second pyrolysis zone B2 is increased compared to the oxygen content G(B1) in the first pyrolysis zone B1 by at least 3 vol.-%, in particular by at least 5 vol.-%, preferably by at least 7.5 vol.-%, particularly preferably by at least 10 vol.-%, and/or that the oxygen content G(B2) in the second pyrolysis zone B2 is increased compared to the oxygen content G(B1) in the first pyrolysis zone B1 by 5 vol.-% to 15 vol.-%, preferably 7.5 vol.-% to 15 vol.-%, more preferably 10 vol.-% to 15 vol.-%.; and/or
   wherein the oxygen content in the first and second pyrolysis zone B1 and B2 is so controlled and/or regulated that the oxygen content G(B1) in the first pyrolysis zone B1 is adjusted stoichiometrically with respect to the plastic matrix to be decomposed, while the oxygen content G(B2) in the second pyrolysis zone B2 is adjusted stoichiometrically with respect to the plastic matrix to be decomposed.

3. Method according to any one of the preceding claims,
wherein the oxygen content during the pyrolysis, preferably during the entire procedure, in particular the oxygen content G(B1) in the first pyrolysis B1 and the oxygen content G(B2) in the second pyrolysis B2, is so controlled and/or regulated, preferably by removal of the decomposition products derived from the decomposition of the plastic matrix, especially gaseous decomposition products, and/or by supplying oxygen, preferably in the form of air; and/or wherein the oxygen content during the pyrolysis, preferably during the entire procedure, in particular the oxygen content G(B1) in the first pyrolysis zone B1 and the oxygen content G(B2) in the second pyrolysis zone B2, is detected by oxygen sensing means, in particular oxygen-sensitive sensors and/or pressure probes, in particular wherein the oxygen content is controlled and/or regulated by the oxygen sensing means by subtracting the decomposition products derived from the decomposition of the plastic matrix, preferably by means of ventilation devices, and/or by supplying oxygen; and/or
wherein the oxygen content during the pyrolysis, preferably during the entire procedure, in particular the oxygen content G(B1) in the first pyrolysis zone B1 and the oxygen content G(B2) in the second pyrolysis zone B2 is so controlled and/or regulated that in the first pyrolysis zone B1 at least only the plastic matrix is substantially selectively pyrolyzed, and in the second pyrolysis zone B2 only the plastics matrix remaining after the first pyrolysis zone B1 and pyrolysis residues, are at least substantially selectively removed, while the surface of the carbon fibers RF recycled in this way is at least partially oxidized.

4. Method according to any one of the preceding claims,
wherein the temperature T(B2) in the second pyrolysis zone B2 is increased compared to the temperature T(B1) in the first pyrolysis zone B1 by 50 °C to 250 °C, preferably by 75 °C to 200 °C, more preferably by 100 °C to 175 °C.

5. Method according to any one of the preceding claims,
wherein the temperature T(B1) in the first pyrolysis zone B1 is adjusted in the range of 375 °C to 475 °C, especially in the range of 390 °C to 465 °C, preferably in the range of 415 °C to 455 °C, particularly preferably in the range of 430 °C to 445 °C, while the temperature T(B2) in the second pyrolysis zone B2 is adjusted in the range of 450 °C to 750 °C, in particular in the range of 480 °C to 690 °C, preferably in the range of 510 °C to 675 °C, particularly preferably in the range of 515 °C to 650 °C, but with the proviso that the temperature T(B2) in the second pyrolysis zone B2 is increased compared to the temperature T(B1) in the first pyrolysis zone B1 by at least 25 °C, especially by at least 50 °C, preferably by at least 75 °C, particularly preferably by at least 100 °C, even more preferably by at least 125 °C, most preferably by at least 150 °C and/or that the temperature T(B2) in the second pyrolysis zone B2 compared to the temperature T(B1) in the first pyrolysis zone B1 is increased by 25 °C to 300 °C, especially by 50 °C to 250 °C, preferably 75 °C to 200 °C, more preferably 100 °C to 175 °C.

6. Method according to any one of the preceding claims,
wherein the temperature during pyrolysis, preferably during the entire procedure, in particular the temperature T(B1) in the first pyrolysis zone B1 and the temperature T(B2) in the second pyrolysis zone B2, is controlled and/or regulated, preferably by means of temperature sensing devices, in particular temperature-sensitive sensors; and/or wherein the temperature during pyrolysis, preferably during the entire procedure, in particular the temperature T(B1) in the first pyrolysis zone B1 and the temperature T(B2) in the second pyrolysis zone B2 is so controlled and/or regulated that in the first pyrolysis zone B1 at least only the plastic matrix is substantially selectively pyrolyzed, and in the second pyrolysis zone B2 only the plastics matrix remaining after the first pyrolysis zone B1 and pyrolysis residues are at least substantially selectively removed, while the surface of the carbon fibers RF recycled in this way is at least partially oxidized.

7. Method according to any one of the preceding claims,
wherein the oxygen content G(B2) in the second pyrolysis zone B2 is increased compared to the oxygen content G(B1) in the first pyrolysis zone B1, and wherein the temperature T(B2) in the second pyrolysis zone B2 is increased compared to the temperature T(B1) in the first pyrolysis zone B1,
wherein the oxygen content G(B1) in the first pyrolysis zone B1 is adjusted in the range of 0.1 vol.-% to 12 vol.-%, in particular in the range of 0.5 vol.-% to 10 vol.-%, preferably in the range of 0.75 vol.-% to 6 vol.-%, particularly preferably in the range of 1 vol.-% to 4 vol.-%, while the oxygen content G(B2) in the second pyrolysis zone B2 is adjusted in the range of 2 vol.-% to 30 vol.-%, in particular in the range of 3 vol.-% to 20 vol.-%, preferably in the range of 5 vol.-% to 17 vol.-%, particularly preferably in the range of 6 vol.-% to 14 vol.-%, but with the proviso that the oxygen content G(B2) in the second pyrolysis zone B2 compared to the oxygen content G(B1) in the first pyrolysis zone B1 is increased by at least 3 vol.-%, in particular by at least 5 vol.-%, preferably by at least 7.5 vol.-%, particularly preferably by at least 10 vol.-%, and/or that the oxygen content G(B2) in the second pyrolysis zone B2 is increased compared to the oxygen content G(B1) in the first pyrolysis zone B1 by 3 vol.-% to 15 vol.-%, particularly by 5 vol.-

% to 15 vol.-%, preferably by 7.5 vol.-% to 15 vol.%, particularly preferably by 10 vol.-% to 15 vol.-%, and wherein the temperature T(B1) in the first pyrolysis zone B1 is adjusted in the range of 375 °C to 475 °C, in particular in the range of 390 °C to 465 °C, preferably in the range of 415 °C to 455 °C, particularly preferably in the range of 430 °C to 445 °C, while the temperature T(B2) in the second pyrolysis zone B2 is adjusted in the range of 450 °C to 750 °C, in particular in the range of 480 °C to 690 °C, preferably in the range of 510 °C to 675 °C, particularly preferably in the range of 515 °C to 650 °C, but with the proviso that the temperature T(B2) in the second pyrolysis zone B2 is increased compared to the temperature T(B1) in the first pyrolysis zone B1 by at least 25 °C, particularly by at least 50 °C, preferably by at least 75 °C, particularly preferably by at least 100 °C, even more preferably °C at least 125 °C, most preferably by at least 150 °C, and/or that the temperature T(B2) in the second pyrolysis zone B2 is increased compared to the temperature T(B1) in the first pyrolysis zone B1 by 25 °C to 300 °C, in particular by 50 °C to 250 °C, preferably by 75 °C to 200 °C, more preferably by 100 °C to 175 °C.

8. Method according to any one of the preceding claims,
   wherein the oxygen content G(B2) in the second pyrolysis zone B2 is increased compared to the oxygen content G(B1) in the first pyrolysis zone B1, and wherein the temperature T(B2) in the second pyrolysis zone B2 is increased compared to the temperature T(B1) in the first pyrolysis zone B1,
   wherein the oxygen content G(B1) in the first pyrolysis zone B1 is adjusted in the range of 0.75 vol.-% to 6 vol.-%, while the oxygen content G(B2) in the second pyrolysis zone B2 is adjusted in the range of 6 vol.-% to 14 vol.-%, but with the proviso that the oxygen content G(B2) in the second pyrolysis zone B2 is increased compared to the oxygen content G(B1) in the first pyrolysis zone B1 by at least 3 vol.-% to 13 vol.-%, and
   wherein the temperature T(B1) is adjusted in the first pyrolysis zone B1 in the range of 375 °C to 475 °C, while the temperature T(B2) in the second pyrolysis zone B2 is adjusted in the range of 450 °C to 750 °C, but with the proviso that the temperature T(B2) in the second pyrolysis zone B2 is increased compared to the temperature T(B1) in the first pyrolysis zone B1 by 50 °C to 250 °C.

9. Method according one of the preceding claims,
   wherein the residence time VD(B1) of the object to be recycled in the first pyrolysis zone B1 lies in the range of 0.1 to 60 minutes, in particular in the range 0.5 to 30 minutes, preferably in the range 0.75 to 15 minutes, more preferably in the range of 1 to 10 minutes, most preferably in the range of 1 to 8 minutes; and/or
   wherein the residence time VD(B2) of the object to be recycled in the second pyrolysis zone B2 lies in the range of 0.01 to 30 minutes, in particular in the range of 0.1 to 12 minutes, preferably in the range of 0.5 to 7.5 minutes, particularly preferably in the range of 1 to 6 minutes, most preferably in the range of 2 to 5 minutes; and/or
   wherein the ratio Q of the residence time VD(B1) of the object to be recycled in the first pyrolysis zone B1 to the residence time VD(B2) of the object to be recycled in the second pyrolysis zone B2 is at least 1.05, especially at least 1.1, preferably at least 1.2, more preferably at least 1.3, particularly preferably at least 1.5, and/or at most 4, in particular at most 3.5, preferably at most 3, more preferably at most 2.75, particularly preferably at most 2.5; and/or
   wherein the ratio Q of the residence time VD(B1) of the object to be recycled in the second pyrolysis zone B2 to the residence time of VD(B2) of the object to be recycled in the first pyrolysis zone B1 satisfies the following equation:

$$1.05 \leq Q \leq 4, \text{ in particular } 1.1 \leq Q \leq 3.5, \text{ preferably } 1.2 \leq Q \leq 3,$$
$$\text{more preferably } 1.3 \leq Q \leq 2.75, \text{ particularly preferably } 1.5 \leq Q \leq 2.5$$

**Revendications**

1. Procédé pour la récupération de fibres de carbone à partir de plastiques contenant des fibres de carbone, en particulier à partir de plastiques renforcés par des fibres de carbone, de préférence à partir de matériaux composites contenant des fibres de carbone et/ou renforcés par des fibres de carbone,

   dans lequel on soumet un objet à base d'un plastique contenant des fibres de carbone, qui comprend des fibres de carbone dans une matrice plastique, à une pyrolyse en plusieurs étapes en présence d'oxygène, la matrice plastique étant décomposée lors de la pyrolyse du plastique avec obtention des fibres de carbone,
   dans lequel on met en oeuvre la pyrolyse dans un dispositif de pyrolyse P, le dispositif de pyrolyse P comprenant au moins les zones de traitement suivantes, dans l'ordre spécifié ci-après, et l'objet passant dans cet ordre par les zones de traitement suivantes :

(A) une zone de chauffage A, dans laquelle l'objet à traiter et/ou à recycler est chauffé à une température définie T(A),

(B1) puis une première zone de pyrolyse B1, dans laquelle, à une température définie T(B1) et à une teneur en oxygène définie G(B1), on utilise et/ou met en oeuvre une pyrolyse du plastique de la matrice plastique de l'objet à traiter,

(B2) puis une deuxième zone de pyrolyse B2, dans laquelle, à une température définie T(B2) et à une teneur définie en oxygène G(B2), on met en oeuvre une pyrolyse finale du plastique, restant encore dans la zone de pyrolyse B1, de la matrice plastique de l'objet à traiter, jusqu'à une élimination au moins pour l'essentiel complète,

(C) puis une zone de refroidissement C, pour refroidir les fibres de carbone RF recyclées, obtenues à partir de la deuxième zone de pyrolyse B2 ;

dans lequel on élève la teneur en oxygène G(B2) dans la deuxième zone de pyrolyse B2 par rapport à la teneur en oxygène G(B1) dans la première zone de pyrolyse B1, et dans lequel on élève la température T(B2) dans la deuxième zone de pyrolyse B2 par rapport à la température T(B1) dans la première zone de pyrolyse B1, dans lequel on ajuste la teneur en oxygène G(B1) dans la première zone de pyrolyse B1 à une valeur comprise dans la plage de 0,1 % en volume à 12 % en volume, et on ajuste la teneur en oxygène G(B2) dans la deuxième zone de pyrolyse B2 à une valeur comprise dans la plage de 3 % en volume à 20 % en volume, mais à la condition que l'on élève la teneur en oxygène G(B2) dans la deuxième zone de pyrolyse B2, par rapport à la teneur en oxygène G(B1) dans la première zone de pyrolyse B1, de 3 % en volume à 15 % en volume, et dans lequel la température T(B2) dans la deuxième zone de pyrolyse B2 est augmentée, par rapport à la température T(B1) dans la première zone de pyrolyse B1, de 25°C à 300°C.

**2.** Procédé selon la revendication 1,

dans lequel on élève la teneur en oxygène G(B2) dans la deuxième zone de pyrolyse B2, par rapport à la teneur en oxygène G(B1) dans la première zone de pyrolyse B1, de 5 % en volume à 15 % en volume, de préférence de 7,5 % en volume à 15 % en volume, d'une manière particulièrement préférée de 10 % en volume à 15 % en volume ; et/ou

dans lequel on ajuste la teneur en oxygène G(B1) dans la première zone de pyrolyse B1 à une valeur comprise dans la plage de 0,5 % en volume à 10 % en volume, de préférence dans la plage de 0,75 % en volume à 6 % en volume, d'une manière particulièrement préférée dans la plage de 1 % en volume à 4 % en volume, et on ajuste la teneur en oxygène G(B2) dans la deuxième zone de pyrolyse B2 à une valeur comprise dans la plage de 5 % en volume à 17 % en volume, d'une manière particulièrement préférée dans la plage de 6 % en volume à 14 % en volume, mais à la condition que l'on élève la teneur en oxygène G(B2) dans la deuxième zone de pyrolyse B2, par rapport à la teneur en oxygène G(B1) dans la première zone de pyrolyse B1, d'au moins 3 % en volume, en particulier d'au moins 5 % en volume, de préférence d'au moins 7,5 % en volume, d'une manière particulièrement préférée d'au moins 10 % en volume, et/ou que l'on élève la teneur en oxygène G(B2) dans la deuxième zone de pyrolyse B2, par rapport à la teneur en oxygène G(B1) dans la première zone de pyrolyse B1, de 5 % en volume à 15 % en volume, de préférence de 7,5 % en volume à 15 % en volume, d'une manière particulièrement préférée de 10 % en volume à 15 % en volume ; et/ou

dans lequel on pilote et/ou régule la teneur en oxygène dans la première et dans la deuxième zones de pyrolyse B1 et B2 de telle sorte que la teneur en oxygène G(B1) dans la première zone de pyrolyse B1 soit ajustée à une valeur sous-stoechiométrique par rapport à la matrice plastique à décomposer, et que la teneur en oxygène G(B2) dans la zone de pyrolyse B2 soit ajustée à une valeur sur-stoechiométrique par rapport à la matrice plastique à décomposer.

**3.** Procédé selon l'une des revendications précédentes,

dans lequel on pilote et/ou régule la teneur en oxygène pendant la pyrolyse, de préférence pendant la totalité du procédé, en particulier la teneur en oxygène G(B1) dans la première zone de pyrolyse B1 et la teneur en oxygène G(B2) dans la deuxième zone de pyrolyse B2, de préférence par extraction des produits de décomposition résultant de la décomposition de la matrice plastique, en particulier des produits de décomposition gazeux, et/ou par apport d'oxygène, de préférence sous forme d'air ; et/ou

dans lequel on détermine la teneur en oxygène pendant la pyrolyse, de préférence pendant la totalité du procédé, en particulier la teneur en oxygène G(B1) dans la première zone de pyrolyse B1 et la teneur en oxygène G(B2) dans la deuxième zone de pyrolyse B2, grâce à des dispositifs détecteurs d'oxygène, en particulier des capteurs et/ou des sondes de pression sensibles à l'oxygène, en particulier dans lequel on pilote et/ou régule, à l'aide des dispositifs détecteurs d'oxygène, la teneur en oxygène par extraction de produits de décomposition résultant de la décomposition de la matrice plastique, de préférence à l'aide de dispositifs de désaérage, et/ou par apport d'oxygène ;

et/ou dans lequel on pilote et/ou régule la teneur en oxygène pendant la pyrolyse, de préférence pendant la totalité du procédé, en particulier la teneur en oxygène G(B1) dans la première zone de pyrolyse B1 et la teneur en oxygène G(B2) dans la deuxième zone de pyrolyse B2, de telle sorte que, dans la première zone de pyrolyse, on ne pyrolyse que la matrice plastique, au moins pour l'essentiel d'une manière sélective, et que l'on n'élimine, dans la deuxième zone de pyrolyse B2, au moins pour l'essentiel d'une manière sélective, que la matrice plastique et les résidus de pyrolyse restant encore après la première zone de pyrolyse B1, et on oxyde au moins partiellement la surface des fibres de carbone RF recyclées de cette manière.

4. Procédé selon l'une des revendications précédentes,
dans lequel on élève la température T(B2) dans la deuxième zone de pyrolyse B2, par rapport à la température T(B1) dans la première zone de pyrolyse B1, de 50°C à 250°C, de préférence de 75°C à 200°C, d'une manière particulièrement préférée de 100°C à 175°C.

5. Procédé selon l'une des revendications précédentes,
dans lequel on ajuste la température T(B1) dans la première zone de pyrolyse B1 à une valeur comprise dans la plage de 375°C à 475°C, en particulier dans la plage de 390°C à 465°C, de préférence dans la plage de 415°C à 455°C, d'une manière particulièrement préférée dans la plage de 430°C à 445°C, et on ajuste à la température T(B2) dans la deuxième zone de pyrolyse B2 à une valeur comprise dans la plage de 450°C à 750°C, en particulier dans la plage de 480°C à 690°C, de préférence dans la plage de 510°C à 675°C, d'une manière particulièrement préférée dans la plage de 515°C à 650°C, mais à la condition que l'on élève la température T(B2) dans la deuxième zone de pyrolyse B2 par rapport à la température T(B1) dans la première zone de pyrolyse B1 d'au moins 25°C, en particulier d'au moins 50°C, de préférence d'au moins 75°C, d'une manière particulièrement préférée d'au moins 100°C, d'une manière encore plus préférée d'au moins 125°C, d'une manière tout particulièrement préférée d'au moins 150°C, et/ou que l'on élève la température T(B2) dans la deuxième zone de pyrolyse B2, par rapport à la température T(B1) dans la première zone de pyrolyse B1, de 25°C à 300°C, en particulier de 50°C à 250°C, de préférence de 75°C à 200°C, d'une manière particulièrement préférée de 100°C à 175°C.

6. Procédé selon l'une des revendications précédentes,

dans lequel on pilote et/ou régule la température pendant la pyrolyse, de préférence pendant la totalité du procédé, en particulier la température T(B1) dans la première zone de pyrolyse B1 et la température T(B2) dans la deuxième zone de pyrolyse B2, de préférence grâce à des dispositifs détecteurs de température, en particulier des capteurs sensibles à la température ; et/ou
dans lequel on pilote et/ou régule la température pendant la pyrolyse, de préférence pendant la totalité de la pyrolyse, en particulier la température T(B1) dans la première zone de pyrolyse B1 et la température T(B2) dans la deuxième zone de pyrolyse B2, de telle sorte que, dans la première zone de pyrolyse B1, on ne pyrolyse que la matrice plastique au moins pour l'essentiel d'une manière sélective, et que, dans la deuxième zone de pyrolyse B2 on n'élimine que la matrice plastique restant encore dans la première zone de pyrolyse B1 et les résidus de pyrolyse, au moins pour l'essentiel d'une manière sélective, et on oxyde au moins partiellement la surface des fibres de carbone RF recyclées de cette manière.

7. Procédé selon l'une des revendications précédentes,

dans lequel on élève la teneur en oxygène G(B2) dans la deuxième zone de pyrolyse B2 par rapport à la teneur en oxygène G(B1) dans la première zone de pyrolyse B1, et dans lequel on élève la température T(B2) dans la deuxième zone de pyrolyse B2 par rapport à la température T(B1) dans la première zone de pyrolyse B1, dans lequel on ajuste la teneur en oxygène G(B1) dans la première zone de pyrolyse B1 à une valeur comprise dans la plage de 0,1 % en volume à 12 % en volume, en particulier dans la plage de 0,5 % en volume à 10 % en volume, de préférence dans la plage de 0,75 % en volume à 6 % en volume, d'une manière particulièrement préférée dans la plage de 1 % en volume à 4 % en volume, et on ajuste la teneur en oxygène G(B2) dans la deuxième zone de pyrolyse B2 à une valeur comprise dans la plage de 2 % en volume à 30 % en volume, en particulier dans la plage de 3 % en volume à 20 % en volume, de préférence dans la plage de 5 % en volume à 17 % en volume, d'une manière particulièrement préférée dans la plage de 6 % en volume à 14 % en volume, mais à la condition qu'on élève la teneur en oxygène G(B2) dans la deuxième zone de pyrolyse B2, par rapport à la teneur en oxygène G(B1) dans la première zone de pyrolyse B1, d'au moins 3 % en volume, en particulier d'au moins 5 % en volume, de préférence d'au moins 7,5 % en volume, d'une manière particulièrement préférée d'au moins 10 % en volume, et/ou que l'on élève la teneur en oxygène G(B2) dans la deuxième zone de pyrolyse B2, par rapport à la teneur en oxygène G(B1) dans la première zone de pyrolyse B1, de 3 % en volume à 15 % en volume, en particulier de 5 % en volume à 15 % en volume, de préférence de 7,5 % en volume à 15 % en volume, d'une manière particulièrement préférée de 10 % en volume à 15 % en volume, et

dans lequel on ajuste la température T(B1) dans la première zone de pyrolyse B1 à une valeur comprise dans la plage de 375°C à 475°C, en particulier dans la plage de 390°C à 465°C, de préférence dans la plage de 415°C à 455°C, d'une manière particulièrement préférée dans la plage de 430°C à 445°C, et on ajuste la température T(B2) dans la deuxième zone de pyrolyse B2 à une valeur comprise dans la plage de 450°C à 750°C, en particulier dans la plage de 480°C à 690°C, de préférence dans la plage de 510°C à 675°C, d'une manière particulièrement préférée dans la plage de 515 à 650°C, mais à la condition que l'on élève la température T(B2) dans la deuxième zone de pyrolyse B2 par rapport à la température T(B1) dans la première zone de pyrolyse B1 d'au moins 25°C, en particulier d'au moins 50°C, de préférence d'au moins 75°C, d'une manière particulièrement préférée d'au moins 100°C, d'une manière encore plus préférée d'au moins 125°C, d'une manière tout particulièrement préférée d'au moins 150°C, et/ou que l'on élève la température T(B2) dans la deuxième zone de pyrolyse B2, par rapport à la température T(B1) dans la première zone de pyrolyse B1, de 25°C à 300°C, en particulier de 50°C à 250°C, de préférence de 75°C à 200°C, d'une manière particulièrement préférée de 100°C à 175°C.

8. Procédé selon l'une des revendications précédentes,

dans lequel on élève la teneur en oxygène G(B2) dans la deuxième zone de pyrolyse B2 par rapport à la teneur en oxygène G(B1) dans la première zone de pyrolyse B1, et dans lequel on élève la température T(B2) dans la deuxième zone de pyrolyse B2 par rapport à la température T(B1) dans la première zone de pyrolyse B1,

dans lequel on ajuste la teneur en oxygène G(B1) dans la première zone de pyrolyse B1 à une valeur comprise dans la plage de 0,75 % en volume à 6 % en volume, et on ajuste la teneur en oxygène G(B2) dans la deuxième zone de pyrolyse B2 à une valeur comprise dans la plage de 6 % en volume à 14 % en volume, mais à la condition que l'on élève la teneur en oxygène G(B2) dans la deuxième zone de pyrolyse B2, par rapport à la teneur en oxygène G(B1) dans la première zone de pyrolyse B1, d'au moins 3 % en volume à 13 % en volume, et

dans lequel on ajuste la température T(B1) dans la première zone de pyrolyse B1 à une valeur comprise dans la plage de 375°C à 475°C et on ajuste la température T(B2) dans la deuxième zone de pyrolyse B2 à une valeur comprise dans la plage de 450°C à 750°C, mais à la condition que élève la température T(B2) dans la deuxième zone de pyrolyse B2, par rapport à la température T(B1) dans la première zone de pyrolyse B1, de 50°C à 250°C.

9. Procédé selon l'une des revendications précédentes,

dans lequel le temps de séjour VD(B1) de l'objet à recycler dans la première zone de pyrolyse B1 est compris dans la plage de 0,1 à 60 minutes, en particulier dans la plage de 0,5 à 30 minutes, de préférence dans la plage de 0,75 à 15 minutes, d'une manière particulièrement préférée dans la plage de 1 à 10 minutes, d'une manière tout particulièrement préférée dans la plage de 1 à 8 minutes ; et/ou

dans lequel le temps de séjour VD(B2) de l'objet à recycler dans la deuxième zone de pyrolyse B2 est compris dans la plage de 0,01 à 30 minutes, en particulier dans la plage de 0,1 à 12 minutes, de préférence dans la plage de 0,5 à 7,5 minutes, d'une manière particulièrement préférée dans la plage de 1 à 6 minutes, d'une manière tout particulièrement préférée dans la plage de 2 à 5 minutes ; et/ou

dans lequel le rapport Q entre le temps de séjour VD(B1) de l'objet à recycler dans la première zone de pyrolyse B1 et le temps de séjour VD(B2) de l'objet à recycler dans la deuxième zone de pyrolyse B2 est d'au moins 1,05, en particulier d'au moins 1,1, de préférence d'au moins 1,2, préférentiellement d'au moins 1,3, d'une manière particulièrement préférée d'au moins 1,5, et d'au plus 4, en particulier d'au plus 3,5, de préférence d'au plus 3, préférentiellement d'au plus 2,75, d'une manière particulièrement préférée d'au plus 2,5 ; et/ou

dans lequel le rapport Q entre le temps de séjour VD(B1) de l'objet à recycler dans la première zone de pyrolyse B1 et le temps de séjour VD(B2) de l'objet à recycler dans la deuxième zone de pyrolyse B2 satisfait aux équations suivantes :

$1,05 \leq Q \leq 4$, en particulier $1,1 \leq Q \leq 3,5$, de préférence $1,2 \leq Q \leq 3$,

préférentiellement $1,3 \leq Q \leq 2,75$,

d'une manière particulièrement préférée $1,5 \leq Q \leq 2,5$.

Fig. 1

Fig. 2A    Fig. 2B    Fig. 2C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008002846 B4
- EP 0636428 A1
- DE 10026761 C1
- US 20100189629 A1
- WO 03089212 A1
- US 2006246391 A1
- DE 2810043 A1
- US 402027 A
- AT E512775 T1
- US 2010189629 A1
- EP 2282879 A1
- WO 2010075952 A1
- EP 1243663 B1
- EP 2255940 A1
- WO 2010053381 A1
- DE 102005001569 B4

**In der Beschreibung aufgeführte Nicht-Patentliteratur**

- **ABE K. ; ONISHI S. ; AKIJAMA H. ; TAKIGUCHI H. ; TAMADA K.** *Journal of the Surface Science Society of Japan,* 2000, vol. 21, 643-650
- The Wetting Behavior of Fibers. **BASKOM W. D.** Modern Approaches to Wettability: Theory and Applications. Plenum Press, 1992, 359-373
- **LEVSEN K.** Physikalische Methoden der Chemie: ESCA. *Chemie in unserer Zeit,* 1976, vol. 10, 48-53